(19) Europäisches Patentamt / European Patent Office / Office européen des brevets

(11) **EP 4 088 098 B1**

(12) **FASCICULE DE BREVET EUROPEEN**

(45) Date de publication et mention de la délivrance du brevet:
**07.08.2024 Bulletin 2024/32**

(21) Numéro de dépôt: **21700197.3**

(22) Date de dépôt: **08.01.2021**

(51) Classification Internationale des Brevets (IPC):
**G01N 21/35** (2014.01)   **A01K 67/02** (2006.01)

(52) Classification Coopérative des Brevets (CPC):
**G01N 21/35**

(86) Numéro de dépôt international:
**PCT/EP2021/050234**

(87) Numéro de publication internationale:
**WO 2021/140175 (15.07.2021 Gazette 2021/28)**

(54) **METHODE DE DETERMINATION DE LA QUALITE D'UNE SEMENCE D'UN ANIMAL**

**VERFAHREN ZUR BESTIMMUNG DER QUALITÄT VON TIERSAMEN**

**METHOD FOR DETERMINING THE QUALITY OF AN ANIMAL'S SEMEN**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2020 BE 202005012**

(43) Date de publication de la demande:
**16.11.2022 Bulletin 2022/46**

(73) Titulaire: **Inoveo**
**5590 Ciney (BE)**

(72) Inventeurs:
 • **BERTOZZI, Carlo**
   **5140 Sombreffe (BE)**
 • **HENROTTE, Emilie**
   **5300 Bonneville (BE)**
 • **BOCCART, Christophe**
   **5590 Ciney (BE)**
 • **BAETEN, Vincent**
   **1560 Hoeilaart (BE)**
 • **DEHARENG, Frédéric**
   **5000 Namur (BE)**

(74) Mandataire: **Calysta NV**
**Lambroekstraat 5a**
**1831 Diegem (BE)**

(56) Documents cités:
**FR-A1- 3 042 868**

 • **DANIEL FILIPE CRUZ ET AL: "Oxidative stress markers: Can they be used to evaluate human sperm quality?", TURKISH JOURNAL OF UROLOGY, vol. 41, no. 4, 14 October 2015 (2015-10-14), pages 198 - 207, XP055299686, ISSN: 2149-3235, DOI: 10.5152/tud.2015.06887**

**Description**

La présente invention se rapporte au domaine de l'élevage et en particulier à la reproduction des animaux.

La présente invention s'intègre dans le cadre des méthodes de production de semences et se rapporte plus particulièrement à la détermination de la qualité d'une semence d'un animal.

Dans le domaine de l'élevage, l'insémination est l'une des plus anciennes biotechnologies de la reproduction. Aussi, depuis son apparition, cette biotechnologie est continuellement en progrès et en développement. La qualité de la semence d'un animal et plus particulièrement de bovin revêt de nos jours un intérêt croissant, que ce soit notamment pour contribuer au progrès génétique des animaux ou encore pour répondre aux attentes des centres d'insémination, des centres de production, laboratoires d'analyses ou encore des éleveurs.

En effet, l'insémination est pratiquée de nos jours à grande échelle et permet notamment :

- la diffusion du progrès génétique dans un cheptel en fécondant un grand nombre de femelles avec la semence d'un seul mâle qui sera choisi pour ses qualités génétiques comme par exemple un taureau de race à viande choisi pour son développement musculaire,
- l'économie de gestion d'une population de reproducteurs mâles,
- l'optimisation des cycles de reproduction et donc des cycles de production, de lait par exemple, et
- la limitation des risques sanitaires dus à la reproduction.

Un procédé d'insémination artificielle est complexe car il comprend de nombreuses étapes, il débute lors de la collecte de la semence et se termine après l'acte d'insémination qui peut aboutir à une réussite ou un échec.

Pour les éleveurs, l'insémination et sa réussite est une démarche importante pour optimiser la gestion des troupeaux car elle permet notamment pour les vaches laitières de maximiser les périodes de production de lait. Une insémination n'aboutissant pas entraîne un retour en oestrus ou chaleurs de la vache enregistré au cours d'une période de 90 jours après l'acte d'insémination. Pour l'éleveur, cela entraîne une production de lait diminuée, la nécessité de répéter l'opération d'insémination et donc des revenus d'exploitation diminués.

On comprend aisément que la qualité de l'insémination et la qualité de la semence employée est d'une grande importance afin de réduire les incertitudes. Ainsi, l'évaluation de la qualité de la semence est un enjeu notable pour les centres de production, les centres d'insémination ou encore les laboratoires d'analyses. Cette évaluation pouvant se faire sur la semence dans son ensemble et/ou en sélectionnant différents composants de la semence, selon un ensemble de critères d'évaluation.

Cependant, la semence est un fluide biologique complexe, constitué par les gamètes mâles baignant dans des sécrétions de différents organes du tractus reproducteur. La semence est notamment constituée des spermatozoïdes, du plasma séminal et d'exosomes.

De plus, les spermatozoïdes sont formés lors de l'étape de spermatogénèse et après avoir traversé l'épididyme, ils s'accumulent dans la queue de cet organe jusqu'au moment de l'éjaculation. Par conséquent, les spermatozoïdes accumulés proviennent de différentes vagues de spermatogénèse et ne présentent pas le même degré de maturité.

Cela ayant pour conséquence que l'échantillon prélevé lors de l'éjaculation de l'animal pour ensuite être analysé contient des spermatozoïdes à différents degrés de maturité dont certains peuvent être infertiles, par exemple morts, immobiles ou présentant des malformations.

Aussi, n'ayant pas le même degré de maturité, les spermatozoïdes d'un même échantillon ne répondront pas de la même manière à un stress subi ce qui peut avoir comme conséquence de rendre infertiles une partie des spermatozoïdes d'un échantillon.

En outre, pour assurer la fécondation, les spermatozoïdes doivent notamment posséder plusieurs caractéristiques telles qu'une mobilité, une production d'ATP, une induction de l'hyperactivation, une faculté à réaliser leur capacitation et leur réaction acrosomique, une membrane plasmique fonctionnelle, une capacité à reconnaître et à se lier à la zone pellucide, ou encore, posséder un ADN intact.

En réalité, on comprend bien que les spermatozoïdes sont des cellules extrêmement complexes, multifonctionnelles et qui de plus nécessitent le bon fonctionnement d'un ensemble de paramètres pour la fécondation.

Par conséquent, déterminer la qualité de la semence est d'une part essentiel pour assurer une semence de qualité aux éleveurs et aux centres d'insémination, permettant de réduire les incertitudes et d'autre part un réel enjeu tant les critères d'évaluation sont nombreux et intimement liés entre eux pour assurer la fécondation.

Historiquement, l'acceptation d'un éjaculat pour sa congélation ultérieure reposait uniquement sur des observations macroscopiques comme par exemple l'analyse du volume, de la couleur, de la viscosité. Ces observations macroscopiques se présentaient davantage comme un outil descriptif et permettant seulement d'éliminer les échantillons ayant une qualité extrêmement médiocre.

On comprend aisément que les observations macroscopiques ne permettent pas de déterminer avec précision et de manière fiable la qualité d'une semence.

Divers tests monoparamétriques ont été développés comme par exemple consistant en l'analyse de la mobilité, de la concentration, du pourcentage de spermatozoïdes présentant une morphologie normale mais ces tests ne parviennent pas à détecter un spermatozoïde qui serait défectueux pour un autre paramètre que celui qui est recherché par le test utilisé.

En outre, avec l'utilisation de ces tests monoparamétriques, les spermatozoïdes infertiles tels que morts, immobiles ou malformés seront analysés au même titre que les spermatozoïdes capables, ce qui n'est pas voulu pour déterminer la qualité d'une semence.

Il n'est pas non plus envisageable pour un laboratoire, un centre de production ou un centre d'analyse d'effectuer une série de tests pour chaque paramètre, pour chaque échantillon pour des raisons de temps et de coût évidentes.

Des analyses multiparamétriques ont donc été développées plus récemment permettant d'obtenir une vision plus globale de l'échantillon, améliorant ainsi la détection d'un paramètre défectueux et permettant de caractériser de mieux en mieux le potentiel fécondant de la semence.

On peut noter par exemple l'utilisation de l'analyse CASA (« Computer Assisted Sperm Analysis») ou encore de l'analyse en cytométrie en flux.

Ces techniques, bien qu'utiles, sont longues à mettre en place, complexes et coûteuses, de sorte qu'en pratique dans un laboratoire ou dans un centre d'analyse, elles ne sont pas utilisées en routine pour déterminer la qualité de la semence d'échantillons servant à créer des produits d'insémination tels que des paillettes d'insémination artificielle. Contrairement à l'utilisation désirée par les centres d'analyse, ces techniques sont principalement utilisées pour alimenter des résultats de recherche.

On connaît en outre de l'art antérieur la technique Raman qui se base sur la diffraction de la lumière (voir CN 1 03940802, CN 103698310 ou encore CN103698311). Cependant cette technique d'analyse nécessite une préparation particulière de l'échantillon, un appareillage coûteux, une mise en oeuvre et une standardisation qui sont complexes pour qu'un laboratoire ou centre d'insémination artificielle puisse l'implémenter en routine.

On connaît également une technique d'analyse de la qualité d'une semence par spectroscopie infrarouge, qui consiste plus particulièrement à analyser un échantillon irradié sous un rayonnement dans l'infrarouge moyen (la longueur d'onde du rayonnement est comprise entre 2,5 $\mu$m et 25 $\mu$m), également connu sous l'acronyme de MIR (« mid-infrared »).

On connaît notamment de l'art antérieur le document WO2017/068266 ou le document FR3042868 qui concerne une méthode de détermination de la qualité d'une semence de bovin.

La méthode de détermination selon ce document antérieur comprend l'analyse d'échantillons d'éjaculat congelés d'animaux vertébrés non humains se présentant sous forme de paillettes ayant préalablement été congelées dans l'azote liquide. L'échantillon contenu dans les paillettes est donc d'abord décongelé puis analysé par spectroscopie MIR.

L'analyse MIR selon ce document antérieur permet, à partir d'un échantillon congelé puis décongelé, de calculer le taux de non-retour à un nombre prédéfini de J jours. Le taux de non-retour à J jours étant une estimation du résultat de l'insémination, succès ou échec, basée sur l'absence d'un retour en oestrus enregistré au cours d'un intervalle de J jours après l'acte d'insémination.

Ce taux de non-retour étant calculé à partir de valeurs de l'absorption et/ou de la dérivée seconde de l'absorption qui sont déterminées à partir d'au moins un spectre d'absorption pour chacune des longueurs d'ondes sélectionnées, le calcul du taux de non-retour selon ce document antérieur est effectué en utilisant une sélection de nombre d'ondes spécifiques.

On connaît également de l'art antérieur le document Daniel Filipe Cruz ET AL : « Oxidative stress markers : Can they be used to evaluate human sperm quality 2 », Turkish Journal of Urology, 14 octobre 2015, qui divulgue une étude sur la qualité du sperme humain suite à un changement aigüe de mode de vie, notamment les festivités académiques. Pour la réalisation de l'analyse FTIR selon ce document, les échantillons sont préalablement centrifugés et congelés.

Malheureusement, les techniques actuelles, qu'elles soient macroscopiques, microscopiques, mono paramétriques, multi paramétriques, utilisant la technologie Raman ou encore la technologie MIR selon le document WO2017/068266 ou le document FR3042868 ne sont pas réalisables pour un laboratoire d'analyse ou un centre d'insémination étant donné que ces techniques entraînent des coûts importants en réactifs, dans les machines nécessaires et dans les moyens humains déployés. De plus, ces analyses sont longues et complexes à mettre en oeuvre et difficilement automatisable en routine. Enfin, ces méthodes sont bien souvent destructives des échantillons.

En effet, la détermination de la qualité d'une semence par un laboratoire, centre de production ou encore centre d'analyse doit présenter plusieurs caractéristiques comme la répétabilité, la précision, la rapidité, la fiabilité et la prise en compte du coût, autant humain que matériel.

Il existe donc un besoin de fournir aux centres de production, aux centres d'analyse et aux laboratoires, une méthode de détermination de la qualité d'une semence d'un animal, de préférence de bovin, qui permette in fine de fournir aux éleveurs et aux centres d'insémination, une semence de qualité au vu du potentiel fécondant.

En outre, le besoin est de fournir une méthode qui soit rapide, non destructive et simple à mettre en oeuvre, qui soit automatisable en routine et par conséquent dont les coûts humains, matériels ou encore en réactifs soient réduits, et enfin dont les résultats obtenus par la méthode soient précis, fiables et répétables permettant de déterminer la qualité d'une semence d'ani-

mal.

L'invention a pour but de pallier les inconvénients de l'état de la technique en procurant une méthode de détermination de la qualité d'une semence d'un animal, comprenant les étapes de :

- prélèvement d'au moins une semence fraîche ou congelée,
- mesure d'au moins un spectre d'absorption $X_j$ d'au moins un échantillon de ladite semence,

caractérisée en ce que ladite méthode comprend en outre les étapes de :

- détermination à partir dudit au moins un spectre d'absorption $X_j$, d'une valeur de la dérivée première des absorptions $X_j'$ ,
- calcul d'au moins un des paramètres, représentatifs de la qualité de ladite semence, choisi dans le groupe constitué de la concentration **Y1**, la mobilité **Y2**, le taux de spermatozoïdes progressifs **Y3**, la viabilité **Y4,** la stabilité des phospholipides membranaires **Y5**, le potentiel mitochondrial **Y6**, le pourcentage de spermatozoïdes avec des lipides peroxydés **Y7,** le pourcentage de spermatozoïdes avec un acrosome intègre **Y8,** la capacité antioxydante TAC **Y9,** la composition en acides gras **Y10,** le pourcentage de spermatozoïdes présentant une morphologie normale **Y11,** l'osmolarité **Y12,** le taux de glutathion GSH **Y13,** le taux de non-retour à 56 jours **Y14,** le taux de non-retour à 90 jours **Y15** et le diagnostic de gestation **Y16,** à partir de ladite dérivée première de l'absorption $X_j'$ précédemment déterminée pour la détermination de la qualité de ladite semence.

Comme on peut le constater la méthode selon la présente invention permet de déterminer la qualité de la semence d'un animal, que l'échantillon soit une semence fraîche ou bien une semence congelée. Cela permet très avantageusement pour un laboratoire d'analyse, un centre de production ou un centre d'insémination, de déterminer la qualité de la semence dont ils disposent très rapidement, quel que soit sa forme, fraîche ou congelée.

Il est apparu que la méthode selon la présente invention permet, de manière particulièrement avantageuse, de prédire une grande quantité de paramètres qui sont chacun d'eux représentatifs de la qualité de la semence. Cette prédiction est rendue possible par différentes corrélations qui ont été réalisées après avoir effectué des milliers de tests sur des échantillons pendant de nombreuses années de mise au point. En outre, il est particulièrement surprenant que la prédiction d'une grande quantité de paramètres qui sont chacun d'eux représentatifs de la qualité de la semence est réalisée à partir d'une seule analyse selon la présente invention, et cela de manière précise, rapide, fiable et reproductible.

De façon particulièrement avantageuse, la méthode selon la présente invention n'est pas destructive de l'échantillon analysé, c'est-à-dire que la méthode selon l'invention ne détruit pas le continuum moléculaire d'une matrice et permet donc l'obtention d'un profil spectral unique et caractéristique de l'échantillon analysé. En effet, la méthode selon la présente invention permet de calculer un ensemble de paramètres représentatifs de la qualité de la semence sans abimer l'échantillon et donc sans le détruire alors que l'échantillon en tant que tel est un matériel fragile et sensible.

En outre, dans la méthode de détermination selon la présente invention, au moins un spectre d'absorption $X_j$ d'au moins un échantillon de ladite semence, qu'elle soit fraîche ou congelée, est mesuré. Par exemple, il est envisagé que la semence fraîche ne tienne compte que d'un éjaculat, alors que la semence congelée, également appelée le lot, peut être le résultat de la congélation d'un seul éjaculat, ou de deux éjaculats regroupés d'un même taureau qui présentent une qualité macroscopique similaire. La méthode de détermination selon la présente invention peut être utilisée dans ces différents cas de figures.

Préférentiellement, la semence d'un animal de la méthode de détermination de la qualité d'une semence selon la présente invention est une semence d'un animal, de préférence d'un animal vertébré, préférentiellement d'un mammifère, particulièrement d'un vertébré non humain, encore plus particulièrement d'un bovin, porcin, caprin, ovin, équin, ruminant et de manière plus préférentielle d'un animal bovin.

Avantageusement, l'étape de mesure d'au moins un spectre d'absorption $X_j$ d'au moins un échantillon de ladite semence est réalisée à l'aide d'un spectromètre comprenant un cristal « ATR : attenuated total reflection » et plus particulièrement avec le programme d'ordinateur OPUS disponible auprès de la société BRUKER.

Par les termes « spectre d'absorption », on entend au sens de la présente invention qu'il s'agit de l'ensemble des absorbances aux longueurs d'ondes $\sigma_j$d'un échantillon.

Selon la présente invention, après la mesure d'au moins un spectre d'absorption $X_j$, et sur base de ce spectre d'absorption $X_j$ mesuré, une valeur de la dérivée première des absorptions $X_j'$ est déterminée. La détermination de la dérivée première des absorptions $X_j'$ permet d'améliorer la résolution spectrale du spectre d'absorption préalablement mesuré.

Il est également apparu de manière particulièrement surprenante que la détermination de la dérivée première des absorptions $X_j'$ , pour le calcul ultérieur des paramètres représentatifs de la qualité de la semence, est réalisée sur base du spectre d'absorption $X_j$ mesuré, et non sur base d'une sélection de nombres d'ondes spécifiques comme décrit dans l'état de la technique. Enfin, la méthode de détermination selon la présente invention comprend, à partir de la dérivée première des absorptions $X_j'$ déterminée, le calcul d'au moins un des paramètres représentatifs de la qualité de la semence.

Ledit au moins un des paramètres, représentatifs de la qualité de la semence est choisi dans le groupe constitué de la concentration Y1, la mobilité Y2, le taux de spermatozoïdes progressifs Y3, la viabilité Y4, la stabilité des phospholipides membranaires 75, le potentiel mitochondrial Y6, le pourcentage de spermatozoïdes avec des lipides peroxydés Y7, le pourcentage de spermatozoïdes avec un acrosome intègre Y8, la capacité antioxydante totale TAC Y9, la composition en acides gras Y10, le pourcentage de spermatozoïdes présentant une morphologie normale Y11, l'osmolarité Y12 et le taux de glutathion GSH Y13, le taux de non-retour à 56 jours Y14, le taux de non-retour à 90 jours 715, le diagnostic de gestation Y16.

Ainsi il est apparu de manière particulièrement avantageuse que la méthode de détermination selon la présente invention permet, à partir de la dérivée première des absorptions $X_j'$, de calculer au moins un des paramètres parmi un ensemble de paramètres qui sont représentatifs de la qualité de la semence, et cela de manière précise, rapide, fiable, reproductible et sans que la méthode soit destructive de l'échantillon.

En effet, la méthode selon la présente invention permet très avantageusement, à partir d'au moins un spectre d'absorption $X_j$ mesuré à partir d'un échantillon, également appelé spectre MIR de l'échantillon, de calculer au moins un paramètre parmi un ensemble de paramètres qui sont chacun d'eux représentatifs de la qualité de la semence. Le paramètre calculé permet de prédire de manière précise ce même paramètre dans l'échantillon et est donc représentatif de la qualité de la semence.

Par spectre MIR, on entend au sens de la présente invention, les longueurs d'ondes comprises entre 4000 et 400 cm$^{-1}$.

Par exemple, le calcul du paramètre concentration Y1 permet, à partir du spectre MIR et suivant la présente invention, de prédire de manière précise la concentration en spermatozoïdes dans l'échantillon.

Le calcul du paramètre mobilité Y2 permet, à partir du spectre MIR, de prédire de manière précise la mobilité des spermatozoïdes dans l'échantillon.

Le calcul du paramètre taux de spermatozoïdes progressifs Y3 permet, à partir du spectre MIR et suivant la présente invention, de prédire de manière précise le taux de spermatozoïdes progressifs dans l'échantillon.

Le calcul du paramètre viabilité Y4 permet, à partir du spectre MIR et suivant la présente invention, de prédire de manière précise la viabilité des spermatozoïdes de l'échantillon de semence.

Le calcul du paramètre stabilité des phospholipides membranaires 75 permet, à partir du spectre MIR et suivant la présente invention, de prédire de manière précise la stabilité des phospholipides membranaires des spermatozoïdes de l'échantillon de semence.

Le calcul du paramètre potentiel mitochondrial Y6 permet, à partir du spectre MIR et suivant la présente invention, de prédire de manière précise le potentiel mitochondrial, autrement dit le niveau énergétique des spermatozoïdes de l'échantillon de semence.

Le calcul du paramètre pourcentage de spermatozoïdes avec des lipides peroxydés Y7 permet, à partir du spectre MIR et suivant la présente invention, de prédire de manière précise le pourcentage de spermatozoïdes avec des lipides peroxydés de l'échantillon de semence.

Le calcul du paramètre pourcentage de spermatozoïdes avec un acrosome intègre Y8 permet, à partir du spectre MIR et suivant la présente invention, de prédire de manière précise le pourcentage de spermatozoïdes avec un acrosome intègre, l'acrosome étant une membrane protégeant la tête du spermatozoïde et qui intervient dans la fécondation avec l'ovule, des spermatozoïdes de l'échantillon de semence.

Le calcul du paramètre capacité antioxydante TAC Y9 permet, à partir du spectre MIR et suivant la présente invention, de prédire de manière précise la capacité antioxydante TAC des spermatozoïdes dans l'échantillon.

Le calcul du paramètre composition en acides gras Y10 permet, à partir du spectre MIR et suivant la présente invention, de prédire de manière précise la composition en acide gras de l'échantillon de semence.

Le calcul du paramètre pourcentage de spermatozoïdes présentant une morphologie normale 711 permet, à partir du spectre MIR et suivant la présente invention, de prédire de manière précise le pourcentage de spermatozoïdes présentant une morphologie normale des spermatozoïdes de l'échantillon de semence.

Le calcul du paramètre osmolarité Y12 permet, à partir du spectre MIR et suivant la présente invention, de prédire de manière précise l'osmolarité de l'échantillon de semence.

Le calcul du paramètre taux de glutathion GSH Y13 permet, à partir du spectre MIR et suivant la présente invention, de prédire de manière précise le taux de glutathion GSH de l'échantillon de semence.

Le calcul du paramètre taux de non-retour à 56 jours Y14 permet, à partir du spectre MIR et suivant la présente invention, de prédire de manière précise le résultat de l'insémination, succès ou échec, basée sur l'absence d'un retour en oestrus enregistré au cours d'un intervalle de 56 jours après l'acte d'insémination.

Le calcul du paramètre taux de non-retour à 90 jours Y15 permet, à partir du spectre MIR et suivant la présente invention, de prédire de manière précise le résultat de l'insémination, succès ou échec, basée sur l'absence d'un retour en oestrus enregistré au cours d'un intervalle de 90 jours après l'acte d'insémination.

Le calcul du paramètre diagnostic de gestation Y16 permet, à partir du spectre MIR et suivant la présente invention, de prédire de manière précise le résultat du diagnostic de gestation, ce paramètre étant avantageusement encore plus fiable que le taux de non-retour. En outre, le diagnostic de gestation sur le terrain est obtenu à partir des informations collectées par les inséminateurs et techniciens après minimum 28 jours après l'acte d'insémination artificielle, par exemple lors d'un palper rectal, d'une échographie, d'une analyse du lait ou du sang.

Ainsi, la présente invention procure une méthode de détermination de la qualité de la semence d'un animal qui est automatisable en routine, qui ne nécessite pas l'utilisation de réactifs ni d'un appareillage coûteux et qui n'est pas destructive, ce qui est particulièrement avantageux et recherché par les centres d'insémination ou laboratoires d'analyse.

Enfin, la présente invention procure une méthode permettant de calculer de manière précise, fiable et répétable, au moins un paramètre caractéristique de la qualité de la semence parmi l'ensemble des paramètres du groupe Y1 à Y16.

Avantageusement, le calcul de la méthode selon la présente invention est un calcul d'au moins deux desdits paramètres, de préférence un calcul d'au moins trois desdits paramètres, préférentiellement un calcul d'au moins quatre desdits paramètres, de manière préférée un calcul d'au moins cinq desdits paramètres, avantageusement un calcul d'au moins six desdits paramètres, de manière avantageuse un calcul d'au moins sept desdits paramètres, de manière particulièrement avantageuse un calcul d'au moins huit desdits paramètres, de préférence un calcul d'au moins neuf desdits paramètres, préférentiellement un calcul d'au moins dix desdits paramètres.

En effet, la méthode de détermination selon la présente invention permet de calculer plusieurs paramètres. Plus le nombre de paramètres calculé, par exemple deux, trois, quatre, cinq, six, sept, huit, neuf, dix ou plus, sera grand plus la qualité de la semence sera déterminée, par prédiction, avec précision.

Dans une forme de réalisation particulière de la méthode selon la présente invention, ledit au moins un spectre d'absorption $X_j$ comprend une première plage de nombre d'ondes choisie dans la plage de nombre d'ondes [1800 cm-1 ; 900 cm-1] et/ou une deuxième plage de nombre d'ondes choisie dans la plage de nombre d'ondes [3000 cm$^{-1}$ ; 2700 cm$^{-1}$].

En effet, il est apparu de manière particulièrement avantageuse que ledit au moins un spectre d'absorption $X_j$, spectre MIR, en comprenant une première plage de nombre d'ondes choisie dans la plage de nombre d'ondes [1800 cm-1 ; 900 cm-1] et/ou une deuxième plage de nombre d'ondes choisie dans la plage de nombre d'ondes [3000 cm$^{-1}$ ; 2700 cm$^{-1}$], est particulièrement adapté pour, selon la présente invention, déterminer une valeur de la dérivée première des absorptions et calculer au moins un des paramètres caractéristiques de la qualité de la semence d'un animal, de préférence d'un bovin.

De préférence, dans la méthode selon la présente invention :

- la concentration Y1 est calculée selon la loi mathématique $Y1 = \beta_0 + \sum_{j=1}^{n} \beta_j X_j'$ , où $X_j'$ $(j \in [1;n])$ est la dérivée première de l'absorption $X_j$, de préférence normalisée par un pré-traitement SNV (« Standard Normal Variate »), pour la plage de nombre d'ondes [1800 cm-1 ; 900 cm-1] et les coefficients de pondération $\beta_0$ et $\beta_j$ $(j \in [1;n])$ sont des constantes ; et/ou

- la mobilité Y2 est calculée selon la loi mathématique $Y2 = \beta_0 + \sum_{j=1}^{n} \beta_j X_j'$ , où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1], et les coefficients de pondération $\beta_0$ et $\beta_{j(j \in [1;n])}$ sont des constantes ; et/ou

- le taux de spermatozoïdes progressifs Y3 est calculé selon la loi mathématique $Y3 = \beta_0 + \sum_{j=1}^{n} \beta_j X_j'$ , où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1], et les coefficients de pondération $\beta_0$ et $\beta_{j(j \in [1;n])}$ sont des constantes ; et/ou

- la viabilité Y4 est calculée selon la loi mathématique $Y4 = \beta_0 + \sum_{j=1}^{n} \beta_j X_j'$ , où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- la stabilité des phospholipides membranaires, c'est-à-dire le pourcentage de spermatozoïdes vivant avec des phospholipides stables, Y5 est calculée selon la loi mathématique $Y5 = \beta_0 + \sum_{j=1}^{n} \beta_j X_j'$ , où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_j$ $(j \in [1;n])$ sont des constantes ; et/ou

- le potentiel mitochondrial Y6 est calculé selon la loi mathématique $Y6 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_j$ $(j \in [1;n])$ sont des constantes ; et/ou

- le pourcentage de spermatozoïdes avec des lipides peroxydés Y7 est calculé selon la loi mathématique Y7 = $\beta_0 + \sum_{j=1}^{n} \beta_j X_j'$, où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- le pourcentage de spermatozoïdes avec un acrosome intègre Y8 est calculée selon la loi mathématique Y8 = $\beta_0 + \sum_{j=1}^{n} \beta_j X_j'$, où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- la capacité antioxydante totale TAC Y9 est calculée selon la loi mathématique $Y9 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1700 cm-1 ; 910 cm-1] et les coefficients de pondération $\beta_0$ et $\beta_{j(j \in [1;n])}$ sont des constantes ; et/ou

- la composition en acides gras Y10 est calculée selon la loi mathématique $Y10 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1] et pour la plage de nombre d'ondes [3000 cm-1 ; 2700 cm-1] et les coefficients de pondération $\beta_0$ et $\beta_{j(j \in [1;n])}$ sont des constantes ; et/ou

- le pourcentage de spermatozoïdes présentant une morphologie normale Y11 est calculée selon la loi mathématique $Y11 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1800 cm-1 ;

900 cm-1] et les coefficients de pondération $\beta_0$ et $\beta_{j(j \in [1;n])}$ sont des constantes ; et/ou

- l'osmolarité Y12 est calculée selon la loi mathématique $Y12 = \beta_0 + \sum_{j=1}^{n} \beta_j X_j'$, où $X_j'$ $(j \in [1;n])$ est la dérivée première de l'absorption $X_j$, de préférence normalisée par un prétraitement SNV, pour la plage de nombre d'ondes [1700 cm-1 ; 910 cm-1] et les coefficients de pondération $\beta_0$ et $\beta_{j(j \in [1;n])}$ sont des constantes ; et/ou

- le taux de glutathion GSH Y13 est calculé selon la loi mathématique $Y13 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- le taux de non-retour à 56 jours 714 est calculé selon la loi mathématique $Y14 = \beta_0 + \sum_{j=1}^{n} \beta_j X_j'$, où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- le taux de non-retour à 90 jours Y15 est calculé selon la loi mathématique $Y15 = \beta_0 + \sum_{j=1}^{n} \beta_j X_j'$, où $X_j'$ $(j \in [1;n])$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j \in [1;n])}$ sont des constantes ; et/ou

- le diagnostic de gestation Y16 est calculé selon la loi mathématique $Y16 = \beta_0 + \sum_{j=1}^{n} \beta_j X_j'$, où $X_j'$ $(j \in [1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j \in [1;n])}$ sont des constantes.

Dans une forme de réalisation particulière de la méthode de détermination selon la présente invention, les valeurs desdits coefficients de pondération $\beta_0$ et $\beta_{j(j \in [1;n])}$ sont obtenues à partir d'un traitement de mesures des spectres d'absorption d'une pluralité d'échantillons de semence d'un animal pour lesquels lesdits paramètres sont connus.

Dans une autre forme de réalisation particulière de la méthode de détermination de la qualité d'une semence selon la présente invention, lors de l'étape de mesure, au moins deux, de préférence au moins trois, spectres d'absorption d'au moins un échantillon de ladite semence sont mesurés et en ce que ladite étape de détermination d'une valeur de la dérivée première de l'absorption $X_j'$ comprend une étape de réalisation d'une moyenne desdits spectres mesurés à partir de laquelle est déterminée ladite valeur de la dérivée première de l'absorption $X_j'$.

Avantageusement, la méthode selon la présente invention comprend en outre une étape de comparaison du au moins un paramètre calculé avec un seuil prédéterminé spécifique au paramètre, permettant de valider la semence pour des besoins de reproduction dans le cas où le paramètre calculé est supérieur ou égal au seuil prédéterminé spécifique du paramètre ou permettant de rejeter la semence dans le cas où le paramètre calculé est inférieur au seuil prédéterminé spécifique du paramètre.

Cette étape de comparaison du paramètre calculé avec un seuil spécifique de ce même paramètre permet avantageusement de valider ou rejeter l'échantillon de semence et donc le lot de semence duquel est issu l'échantillon. Il est également possible d'attribuer un score pour chaque paramètre représentatif de la qualité de la semence permettant d'attribuer un score global de qualité de la semence.

Dans un autre mode de réalisation de la présente invention, le score global de la qualité de la semence attribué peut être reporté sur les paillettes d'insémination artificielle produites avec ladite semence issue de la méthode selon l'invention.

De manière particulièrement avantageuse, la détermination de la qualité de la semence fraîche de la méthode selon la présente invention, est obtenu entre 30 secondes et 5 minutes, de préférence entre 30 secondes et 4 minutes, préférentiellement entre 30 secondes et 3 minutes, de manière préférée entre 30 secondes et 2 minutes, préférentiellement entre 30 secondes et 1 minute.

Autrement dit, la méthode de détermination de la qualité d'une semence fraîche d'un animal selon la présente invention est réalisée pendant une période de temps comprise entre 30 secondes et 5 minutes, de préférence entre 30 secondes et 4 minutes, préférentiellement entre 30 secondes et 3 minutes, de manière préférée entre 30 secondes et 2 minutes, préférentiellement entre 30 secondes et 1 minute.

Dans une autre forme de réalisation particulièrement avantageuse, la détermination de la qualité de la semence congelée de la méthode selon la présente invention, est obtenue entre 30 minutes et 90 minutes, de préférence entre 30 minutes et 75 minutes, préférentiellement entre 30 minutes et 60 minutes, de manière préférée entre 30 minutes et 45 minutes, de manière particulièrement avantageuse entre 30 minutes et 35 minutes.

Autrement dit, la méthode de détermination de la qualité d'une semence congelée d'un animal selon la présente invention est réalisée pendant une période de temps comprise entre 30 minutes et 90 minutes, de préférence entre 30 minutes et 75 minutes, préférentiellement entre 30 minutes et 60 minutes, de manière préférée entre 30 minutes et 45 minutes, de manière particulièrement avantageuse entre 30 minutes et 35 minutes.

Avantageusement, la méthode selon la présente invention comprend en outre une étape de fabrication de paillettes pour les besoins de reproduction à partir de la/les dite(s) semence(s) d'un animal validée(s).

En effet, la méthode de détermination de la qualité d'une semence d'un animal, de préférence de bovin, comprenant une étape de fabrication de paillettes permet de fournir des paillettes d'insémination artificielle dont la qualité a été préalablement déterminée et validée avant le conditionnement de la semence en paillette. Cela étant particulièrement avantageux car il est alors possible de fournir des paillettes comprenant un score qualitatif pour au moins un des paramètres calculés et de préférence un score qualitatif global représentatif de la qualité de la semence.

D'autres formes de réalisation de la méthode de détermination de la qualité d'une semence selon la présente invention sont indiquées dans les revendications annexées.

La présente invention se rapporte en outre à une utilisation de la méthode selon la présente invention pour fabriquer une paillette d'insémination artificielle de semence d'un animal comprenant un score qualitatif pour au moins un des paramètres calculés, de préférence un score qualitatif global, représentatif de la qualité de la semence sélectionnée par ladite méthode selon l'invention.

La présente invention se rapporte aussi à une utilisation d'un ordinateur pour la mise en oeuvre de la méthode de détermination de la qualité d'une semence selon l'invention et, à un logiciel pour la mise en oeuvre de la méthode de détermination de la qualité d'une semence selon l'invention.

D'autres formes de réalisation de l'utilisation d'un ordinateur et du logiciel pour la mise en oeuvre de la méthode de détermination selon la présente invention sont indiquées dans les revendications annexées.

D'autres caractéristiques, détails et avantages de l'invention ressortiront de la description donnée ci-après, à titre non limitatif et en faisant référence aux exemples et figures annexées.

1. Protocole expérimental

Les échantillons analysés sont des éjaculats d'animaux vertébrés et plus particulièrement de bovins sous la forme de semence fraiche, n'ayant pas subi de traitement pour l'analyse, ou bien sous la forme de paillettes, conservées dans l'azote liquide.

Les analyses préliminaires pour la réalisation des modèles de prédiction ont été réalisées sur plus de 5180 éjaculats provenant de plus de 300 taureaux différents.

### 2. Préparation des échantillons

Pour la préparation des échantillons congelés, dans une première étape, les paillettes sont décongelées au bain-marie à 37°C +/-2°C pendant 30 secondes. Dans une deuxième étape, le contenu décongelé de deux paillettes est transféré dans un Eppendorf. L'Eppendorf est ensuite centrifugé à 3500g pendant 5 minutes, après la centrifugation le surnageant est évacué et 600 µL de NaCl est ajouté. Après 5 minutes d'attente, une nouvelle centrifugation à 3500g pendant 5 minutes est effectuée, suivi d'une nouvelle évacuation du surnageant et d'un nouvel ajout de 600 µL de NaCl. Enfin, une troisième centrifugation à 3500g pendant 5 minutes est effectuée, le surnageant est évacué et le tube Eppendorf est conservé à 4°C en attente de l'analyse du culot en MIR.

### 3. Acquisition spectrale MIR

Les spectres sont acquis en absorbance de 4000 à 600 cm-1. La résolution spectrale est de 4 cm-1 et 64 numérisations sont effectuées.

Le spectromètre comprend un diamant sur lequel une goutte d'eau est placée afin de faire l'acquisition du bruit de fond, avec 128 numérisations. En effet, la semence étant constituée majoritairement d'eau, cette opération permet d'enlever l'information spectrale liée à l'eau afin de faire ressortir, ultérieurement, uniquement l'information spectrale liée aux autres composants de la semence (composés du plasma séminal et spermatozoïdes). Cette opération d'évaluation du bruit de fond est avantageusement réalisée toutes les 10 lectures.

Suite à l'acquisition du bruit de fond, 10 µL d'échantillon de semence fraîche ou de semence décongelée et préparée sont disposés sur le diamant du spectromètre, propre et sec. L'analyse par le spectromètre sur l'échantillon est lancée avec 32 numérisations, de préférence l'analyse est réalisée en triplicat (3 × 10 µL d'échantillon). Entre chaque analyse, une étape de nettoyage du diamant est réalisée, l'échantillon est enlevé à l'aide de papier absorbant, le diamant est rincé à l'aide d'eau distillée puis essuyé et séché à l'aide d'un nouveau papier absorbant avec de l'éthanol afin d'enlever toute trace d'humidité.

### 4. Traitement des spectres

Les spectres sont analysés à l'aide du logiciel OPUS dans le domaine 3800 à 900 cm-1, et plus particulièrement dans le domaine 3000 à 2700 cm-1 et dans le domaine 1800 à 900 cm-1 qui est la partie la plus informative du spectre autrement appelée l'empreinte digitale du spectre.

L'analyse étant réalisée de préférence en triplicat d'échantillons d'un éjaculat, les 3 spectres acquis sont moyennés afin d'obtenir un spectre moyen par éjaculat.

Un prétraitement SNVD1 est appliqué à l'ensemble des spectres. Par prétraitement SNVD1, on entend au sens de la présente invention une normalisation SNV « Standard Normal Variate » afin de corriger individuellement l'effet de la lumière et la dérivée 1ère des absorptions pour améliorer la résolution spectrale.

### 5. Choix de la matrice

Pour le traitement des spectres, une matrice est constituée sur base d'un ensemble de spectres pour lesquels des valeurs de références sont disponibles (données laboratoires, données de fertilité sur le terrain, données sur les acides gras ou autres paramètres).

Les différentes matrices décrites ci-dessous ont été balancées c'est-à-dire qu'un équilibre a été réalisé dans le nombre de mauvaises, moyennes et bonnes semences pour les paramètres mesurés. En outre les spectres issus des semences surnuméraires sont ôtés, de sorte que le nombre d'éjaculats considérés pour la calibration des différents paramètres vont de 49 à 1392 éjaculats.

Une première matrice est constituée des spectres obtenus à partir de la semence fraîche et reliée à des paramètres mesurés in vitro (valeurs de références = données laboratoire).

Une deuxième matrice est constituée des spectres obtenus à partir de semences congelées, et pour lesquelles les données de fertilité (TNR 56 - taux de non-retour à 56 jours, TNR90 - taux de non-retour à 90 jours, et diagnostic de gestation) sont disponibles. Cela est rendu possible par la traçabilité des doses produites par le centre d'insémination artificielle de la demanderesse jusqu'à l'acte d'insémination, la dose/paillette présentant un code barre unique qui est scanné au moment de l'acte d'insémination grâce à un système d'assistant personnel digital dont les inséminateurs sont équipés.

Une troisième matrice est constituée des spectres obtenus à partir de la semence fraîche pour lesquels des données de fertilité (TNR 56 - taux de non-retour à 56 jours, TNR90 - taux de non-retour à 90 jours, et diagnostic de gestation) sont disponibles et mises en place.

Ces trois matrices ont été analysées afin de développer des modèles de régression pour les différents paramètres analysés, en frais ou en post-congélation. Le développement des modèles de régression est réalisé avec la méthode des moindres carrés partiels PLS.

### 6. Résultats et calibrations obtenues

La performance des modèles établis est évaluée grâce au $R^2$ (coefficient de détermination de calibration) et grâce au RPD (rapport performance/déviation) calculé en faisant le rapport entre la déviation standard (SD) et l'erreur standard de validation croisée (RMSECV).

En effet, le RPD évalue la précision du modèle. Des valeurs inférieures à 1,5 indiquent une mauvaise précision du modèle, les valeurs entre 1,5 et 2 montrent que l'erreur de prédiction est la moitié de l'erreur originale, les valeurs entre 2 et 2,5 indiquent une prédiction quantitative approximative alors que les valeurs incluses entre 2,5 et 3 ou supérieures à 3 indiquent une excellente précision de prédiction.

7. Description détaillée des figures

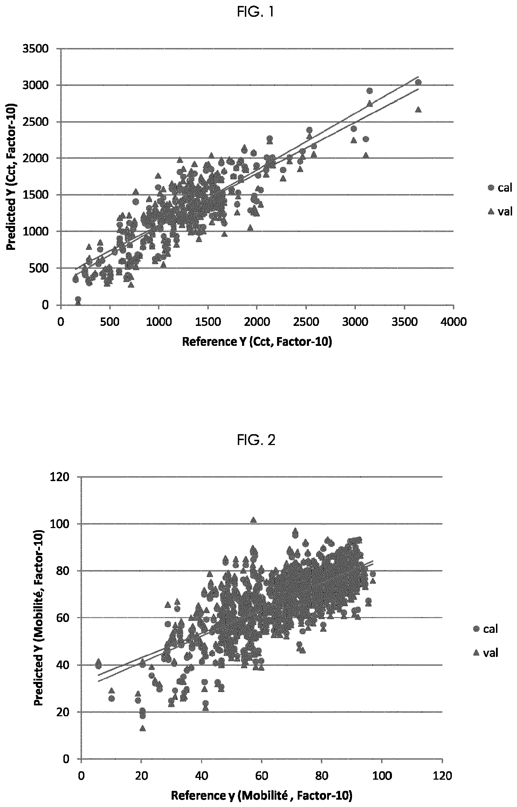

La figure 1 montre un modèle de régression PLS pour le paramètre de la concentration réalisé avec les spectres MIR de la semence fraîche avec pré-traitement SNVD1 et validation croisée.

La concentration Y1 est calculée selon la loi mathématique $Y1 = \beta_0 + \sum_{j=1}^{n} \beta_j X_j'$, où $X_j'$ $(j \in [1;n])$ est la dérivée première de l'absorption $X_j$ normalisée par un pré-traitement SNV pour la plage de nombre d'ondes [1800 cm$^{-1}$ ; 900 cm$^{-1}$] et les coefficients de pondération $\beta_0$ et $\beta_{j(j \in [1;n])}$ sont des constantes.

La matrice balancée utilisée est constituée de 1392 éjaculats. Le R$^2$ obtenu est de 0.75 et le RPD est de 1.9. Ces performances permettent de prédire la concentration en spermatozoïdes dans l'échantillon de manière précise, rapide et reproductible à partir du spectre MIR.

Les valeurs de référence de la concentration sont indiquées en abscisse et représentées par les points triangle (série ▲ val).

Les valeurs prédites de la concentration sont indiquées en ordonnée et représentées par les points rond (série ● cal).

Les valeurs de la concentration sont exprimées avec un facteur -10.

La figure 2 montre un modèle de régression PLS pour le paramètre de la mobilité réalisé avec les spectres MIR de la semence fraîche avec pré-traitement SNVD1 et validation croisée.

La mobilité $Y2$ est calculée selon la loi mathématique Y2 = $\beta_0 + \sum_{j=1}^{n} \beta_j X_j'$, où $X_j'$ $(j \in [1;n])$ est la dérivée première de l'absorption $X_j$ normalisée par un pré-traitement SNV, pour la plage de nombre d'ondes [1800 cm-1 ; 900 cm-1] et les coefficients de pondération $\beta_0$ et $\beta_{j(j \in [1;n])}$ sont des constantes.

La matrice balancée utilisée est constituée de 1392 éjaculats. Le R$^2$ obtenu est de 0.63 et le RPD est de 1.4 pour la mobilité mesurée en frais, et de 0.44 et 1.2, respectivement, pour la mobilité mesurée après congélation de la semence. Ces performances permettent d'avoir une estimation de la mobilité en frais des spermatozoïdes dans l'échantillon, l'erreur de prédiction s'approchant de la moitié de l'erreur originale, de manière rapide et reproductible à partir du spectre MIR. La prédiction de la mobilité après congélation présente des performances de calibration inférieures et insuffisantes.

Les valeurs de référence de la mobilité sont indiquées en abscisse et représentées par les points triangle (série ▲ val).

Les valeurs prédites de la mobilité sont indiquées en ordonnée et représentées par les points rond (série ● cal).

Les valeurs de la mobilité sont exprimées avec un facteur -10.

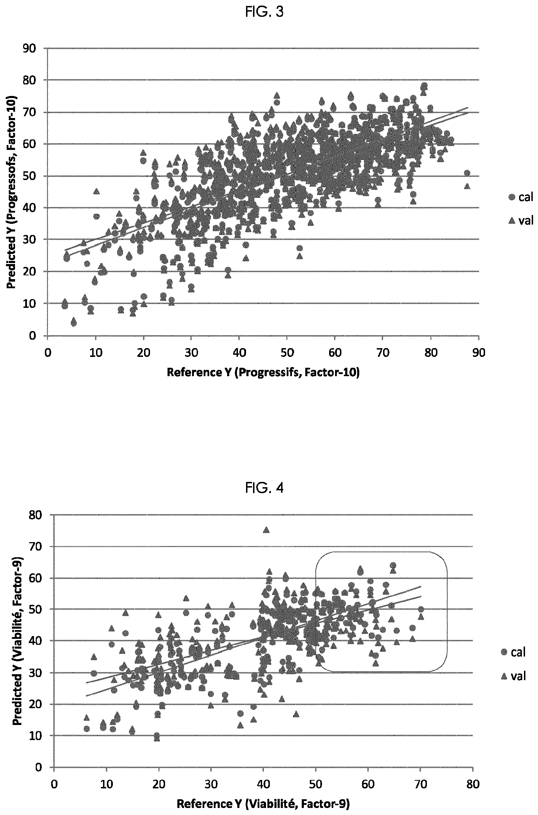

La figure 3 montre un modèle de régression PLS pour le paramètre du taux de spermatozoïdes progressifs réalisé avec les spectres MIR de la semence fraîche avec pré-traitement SNVD1 et validation croisée.

Le taux de spermatozoïdes progressifs Y3 est calculé selon la loi mathématique $Y3 = \beta_0 + \sum_{j=1}^{n} \beta_j X_j'$, où $X_j'$ $(j \in [1;n])$ est la dérivée première de l'absorption $X_j$ normalisée par un pré-traitement SNV, pour la plage de nombre d'ondes [1800 cm-1 ; 900 cm-1], et les coefficients de pondération $\beta_0$ et $\beta_{j(j \in [1;n])}$ sont des constantes.

La matrice balancée utilisée est constituée de 1392 éjaculats. Le R$^2$ obtenu est de 0.57 et le RPD est de 1.4 pour la mobilité progressive mesurée en frais, et de 0.35 et 1.1, respectivement, pour la mobilité progressive mesurée après congélation de la semence. Ces performances permettent d'avoir une estimation de la mobilité en frais des spermatozoïdes dans l'échantillon, l'erreur de prédiction s'approchant de la moitié de l'erreur originale, de manière rapide et reproductible à partir du spectre MIR. La mobilité progressive après congélation présente des performances de calibration inférieures par rapport à la mobilité progressive sur la semence fraîche.

Les valeurs de référence du taux de spermatozoïdes progressifs sont indiquées en abscisse et représentées par les points triangle (série ▲ val).

Les valeurs prédites du taux de spermatozoïdes progressifs sont indiquées en ordonnée et représentées par les points rond (série • cal).

Les valeurs du taux de spermatozoïdes progressifs sont exprimées avec un facteur-10.

La figure 4 montre un modèle de régression PLS pour le paramètre de la viabilité réalisé avec les spectres MIR de la semence fraiche avec pré-traitement SNVD1 et validation croisée.

La viabilité Y4 est calculée selon la loi mathématique Y4 = $\beta_0 + \sum_{j=1}^{n} \beta_j X_j'$, où $X_j'$ $(j \in [1;n])$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j \in [1;n])}$ sont des constantes.

La matrice balancée utilisée est constituée de 1386 éjaculats. Le $R^2$ obtenu est de 0.6 et le RPD est de 1.3. Ces performances permettent de valider que les éjaculats réellement mesurés à plus de 50% de viables sont prédits dans la classe avec plus de 30% de spermatozoïdes viables (seuil de qualité acceptable).

Les valeurs de référence de la viabilité sont indiquées en abscisse et représentées par les points triangle (série ▲ val).

Les valeurs prédites de la viabilité sont indiquées en ordonnée et représentées par les points rond (série ● cal).

Les valeurs de la viabilité sont exprimées avec un facteur -9.

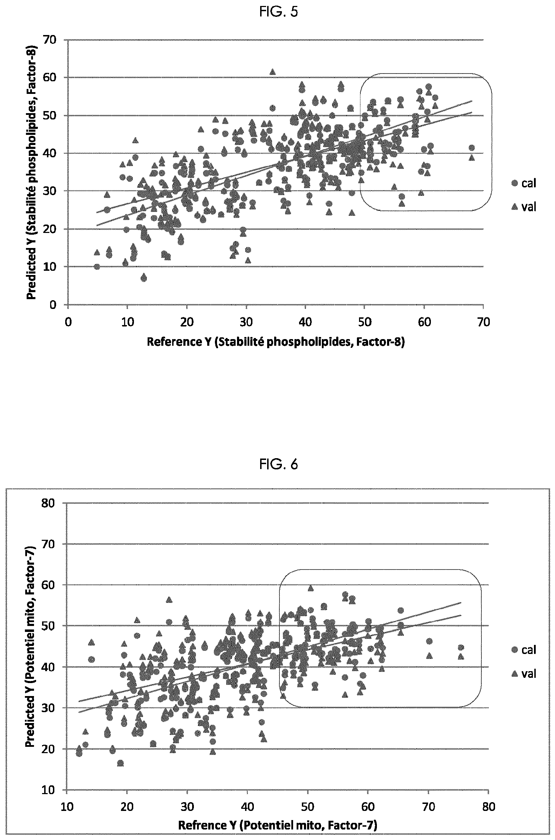

La figure 5 montre un modèle de régression PLS pour le paramètre du pourcentage de spermatozoïdes avec des phospholipides stables réalisé avec les spectres MIR de la semence fraîche avec prétraitement SNVD1 et validation croisée.

La stabilité des phospholipides membranaires, autrement dit le pourcentage de spermatozoïdes vivants avec des phospholipides stables Y5 est calculée selon la loi mathématique $Y5 = \beta_0 + \sum_{j=1}^{n} \beta_j X'_j$, où $X'_{j\ (j\in[1;n])}$ est la dérivée première de l'absorption $X_j$, normalisée par un prétraitement SNV, pour la plage de nombre d'ondes [1800 cm-1 ; 900 cm-1] et les coefficients de pondération $\beta_0$ et $\beta_{j(j\in[1;n])}$ sont des constantes.

La matrice balancée utilisée est constituée de 1386 éjaculats. Le $R^2$ obtenu est de 0.6 et le RPD est de 1.3. Ces performances permettent de valider que les éjaculats réellement mesurés à plus de 50% de viables avec une bonne organisation des phospholipides membranaires sont prédits dans la classe avec plus de 25% de spermatozoïdes correspondants (seuil de qualité acceptable).

Les valeurs de référence de la stabilité des phospholipides membranaires sont indiquées en abscisse et représentées par les points triangle (série ▲ val).

Les valeurs prédites de la stabilité des phospholipides membranaires sont indiquées en ordonné et représentées par les points rond (série ● cal).

Les valeurs de la stabilité des phospholipides membranaires sont exprimées avec un facteur -8.

La figure 6 montre un modèle de régression PLS pour le paramètre du potentiel mitochondrial, autrement dit pour le pourcentage de spermatozoïdes avec des mitochondries polarisées, réalisé avec les spectres MIR de la semence fraîche avec pré-traitement SNVD1 et validation croisée.

Le potentiel mitochondrial Y6 est calculé selon la loi mathématique $Y6 = \beta_0 + \sum_{j=1}^{n} \beta_j X'_j$, où $X'_{j\ (j\in[1;n])}$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

La matrice non balancée utilisée est constituée de 1386 éjaculats. Le $R^2$ obtenu est de 0.46 et le RPD est de 1.1. Les éjaculats réellement mesurés à plus de 45 % de spermatozoïdes avec des mitochondries bien polarisées sont prédits dans la classe avec plus de 30% de spermatozoïdes correspondants (seuil de qualité acceptable).

Les valeurs de référence du potentiel mitochondrial sont indiquées en abscisse et représentées par les points triangle (série ▲ val).

Les valeurs prédites du potentiel mitochondrial sont indiquées en ordonné et représentées par les points rond (série ● cal).

Les valeurs du potentiel mitochondrial sont exprimées avec un facteur -7.

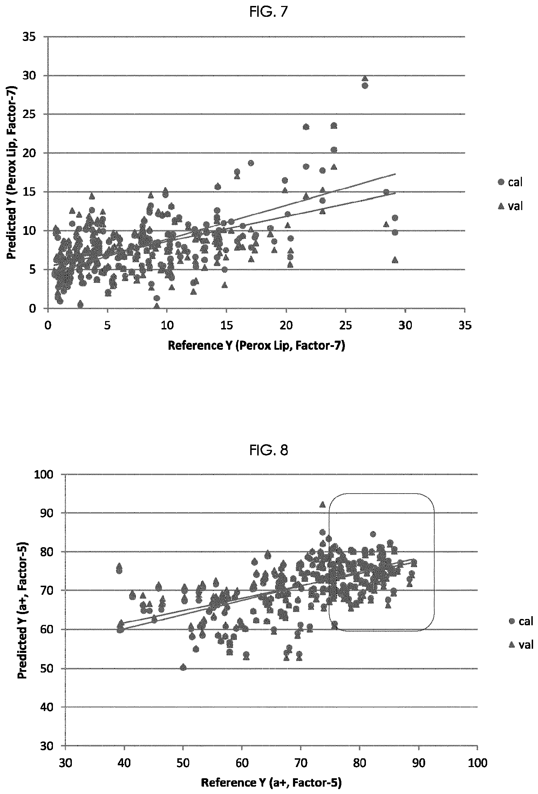

La figure 7 montre un modèle de régression PLS pour le paramètre du pourcentage de spermatozoïdes avec des lipides peroxydés, réalisé avec les spectres MIR de la semence fraîche avec prétraitement SNVD1 et validation croisée.

Le pourcentage de spermatozoïdes avec des lipides peroxydés Y7 est calculé selon la loi mathématique $Y7 = \beta_0 + \sum_{j=1}^{n} \beta_j X'_j$, où $X'_{j\ (j\in[1;n])}$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

Une matrice totale de 1386 éjaculats a été utilisée. Le $R^2$ obtenu est de 0.53 et le RPD est de 1.2.

Les valeurs de référence du pourcentage de spermatozoïdes avec des lipides peroxydés sont indiquées en abscisse et représentées par les points triangle (série ▲ val).

Les valeurs prédites du pourcentage de spermatozoïdes avec des lipides peroxydés sont indiquées en ordonnée et représentées par les points rond (série ● cal).

Les valeurs du pourcentage de spermatozoïdes avec des lipides peroxydés sont exprimées avec un facteur -7.

La figure 8 montre un modèle de régression PLS pour le paramètre du pourcentage de spermatozoïdes avec un acrosome intègre, réalisé avec les spectres MIR de la semence fraîche avec prétraitement SNVD1 et validation croisée.

Le pourcentage de spermatozoïdes avec un acrosome intègre Y8 est calculée selon la loi mathématique Y8 $\beta_0 + \sum_{j=1}^{n} \beta_j X'_j$, où $X'_{j\ (j\in[1;n])}$ est la dérivée première de l'absorption $X_j$, normalisée par un prétraitement SNV, pour la plage de nombre d'ondes [1800 cm-1 ; 900 cm-1] et les coefficients de pondération $\beta_0$ et $\beta_{j(j\in[1;n])}$ sont des constantes.

La matrice non balancée utilisée est constituée de 1386 éjaculats. Le $R^2$ obtenu est de 0.39 et le RPD est de 1.2. Les éjaculats réellement mesurés à plus de 75 % de spermatozoïdes avec un acrosome intègre sont prédits dans la classe avec plus de 60% de spermatozoïdes correspondants (seuil de qualité acceptable).

Les valeurs de référence du pourcentage de spermatozoïdes avec un acrosome intègre sont indiquées en abscisse et représentées par les points triangle (série ▲ val).

Les valeurs prédites du pourcentage de spermatozoïdes avec un acrosome intègre sont indiquées en ordonnée et représentées par les points rond (série ● cal).

Les valeurs du pourcentage de spermatozoïdes avec un acrosome intègre sont exprimées avec un facteur -5.

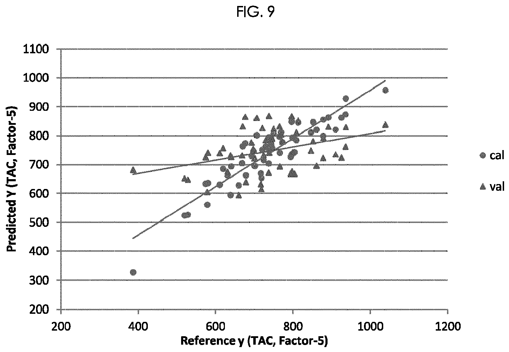

La figure 9 montre un modèle de régression PLS pour le paramètre de la capacité antioxydante totale TAC, réalisé avec les spectres MIR de la semence fraîche avec pré-traitement SNVD1 et validation croisée.

La capacité antioxydante totale TAC Y9 est calculée selon la loi mathématique

$$Y9 = \beta_0 + \sum_{j=1}^{n} \beta_j X_j'$$

, où $X_j'$ ($j \in [1;n]$) est la dérivée première de l'absorption $X_j$, normalisée par un pré-traitement SNV, pour la plage de nombre d'ondes [1700 cm-1 ; 910 cm-1] et les coefficients de pondération $\beta_0$ et $\beta_{j(j \in [1;n])}$ sont des constantes.

La matrice non balancée utilisée est constituée de 59 éjaculats. Le $R^2$ obtenu est de 0.83 et le RPD est de 1.1.

Les valeurs de référence de la capacité antioxydante totale TAC sont indiquées en abscisse et représentées par les points triangle (série ▲ val).

Les valeurs prédites de la capacité antioxydante totale TAC sont indiquées en ordonnée et représentées par les points rond (série · cal).

Les valeurs de la capacité antioxydante totale TAC sont exprimées avec un facteur -5.

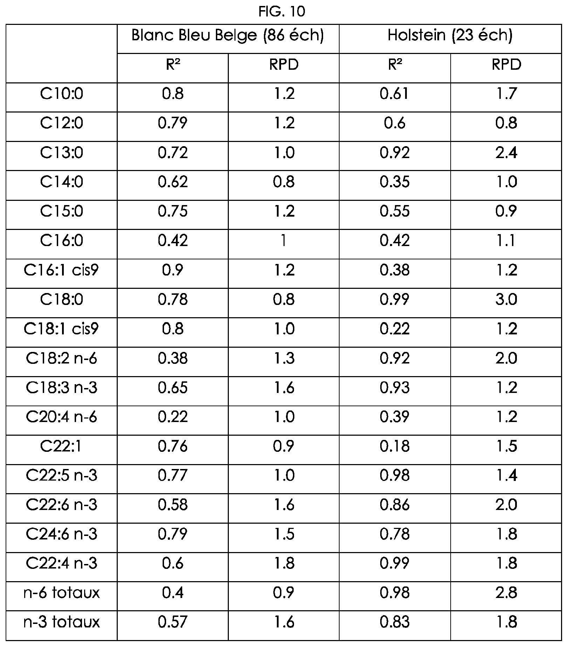

La figure 10 est un tableau reprenant les $R^2$ et les RPD obtenus pour le paramètre de la composition en acides gras, dosés dans les spermatozoïdes, réalisé avec les spectres MIR de la semence fraîche avec pré-traitement SNVD1 et validation croisée, pour les taureaux Blanc-Bleu-Belge (BBB) et Holstein.

La composition des spermatozoïdes pour les différents acides gras mesurés Y10 est calculée selon la loi mathématique Y10 $= \beta_0 + \sum_{j=1}^{n} \beta_j X_j'$, où $X_j'$ ($j \in [1;n]$) est la dérivée première de l'absorption $X_j$, normalisée par un pré-traitement SNV, pour la plage de nombre d'ondes [1800 cm-1 ; 900 cm-1] et pour la plage de nombre d'ondes [3000 cm-1 ; 2700 cm-1] et les coefficients de pondération $\beta_0$ et $\beta_{j(j \in [1;n])}$ sont des constantes.

La matrice non balancée utilisée est constituée de 86 éjaculats en BBB et 23 éjaculats en Holstein. Ces performances permettent généralement de prédire entre autres la présence des acides gras de type n-3 dans l'échantillon de manière précise et rapide à partir du spectre MIR, de manière plus avantageuse pour les plus insaturés d'entre eux.

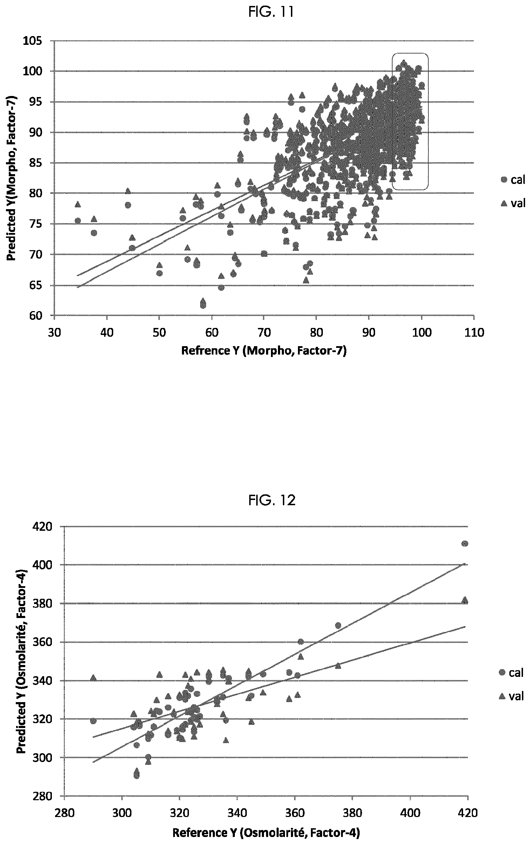

La figure 11 montre un modèle de régression PLS pour le paramètre du pourcentage de spermatozoïdes présentant une morphologie normale, réalisé avec les spectres MIR de la semence fraîche avec pré-traitement SNVD1 et validation croisée.

Le pourcentage de spermatozoïdes présentant une morphologie normale Y11 est calculée selon la loi mathématique Y11 $= \beta_0 + \sum_{j=1}^{n} \beta_j X_j'$, où $X_j'$ ($j \in [1;n]$) est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j \in [1;n])}$ sont des constantes.

La matrice non balancée utilisée est constituée de 1392 éjaculats. Le $R^2$ obtenu est de 0.45 et le RPD est de 1.3. Les éjaculats réellement mesurés à plus de 95 % de spermatozoïdes avec une morphologie normale sont prédits dans la classe avec plus de 80% de spermatozoïdes correspondants (seuil de qualité acceptable).

Les valeurs de référence du pourcentage de spermatozoïdes présentant une morphologie normale sont indiquées en abscisse et représentées par les points triangle (série ▲ val).

Les valeurs prédites du pourcentage de spermatozoïdes présentant une morphologie normale sont indiquées en ordonnée et représentées par les points rond (série ● cal).

Les valeurs du pourcentage de spermatozoïdes présentant une morphologie normale sont exprimées avec un facteur -7.

La figure 12 montre un modèle de régression PLS pour le paramètre de l'osmolarité, réalisé avec les spectres MIR de la semence fraîche avec pré-traitement SNVD1 et validation croisée.

L'osmolarité Y12 est calculée selon la loi mathématique Y12 $= \beta_0 + \sum_{j=1}^{n} \beta_j X_j'$, où $X_j'$ ($j \in [1;n]$) est la dérivée première de l'absorption $X_j$, normalisée par un pré-traitement SNV, pour la plage de nombre d'ondes [1700 cm-1 ; 910 cm-1] et les coefficients de pondération $\beta_0$ et $\beta_{j(j \in [1;n])}$ sont des constantes.

La matrice non balancée utilisée est constituée de 56 éjaculats. Le $R^2$ obtenu est de 0.88 et le RPD est de 1.4. Ces performances permettent d'avoir une estimation de l'osmolarité de l'échantillon (l'erreur de prédiction s'approche de la moitié de l'erreur originale) de manière rapide à partir du spectre MIR.

Les valeurs de référence de l'osmolarité sont indiquées en abscisse et représentées par les points triangle (série ▲ val).

Les valeurs prédites de l'osmolarité sont indiquées en ordonnée et représentées par les points rond (série ● cal).

Les valeurs de l'osmolarité sont exprimées avec un facteur -4.

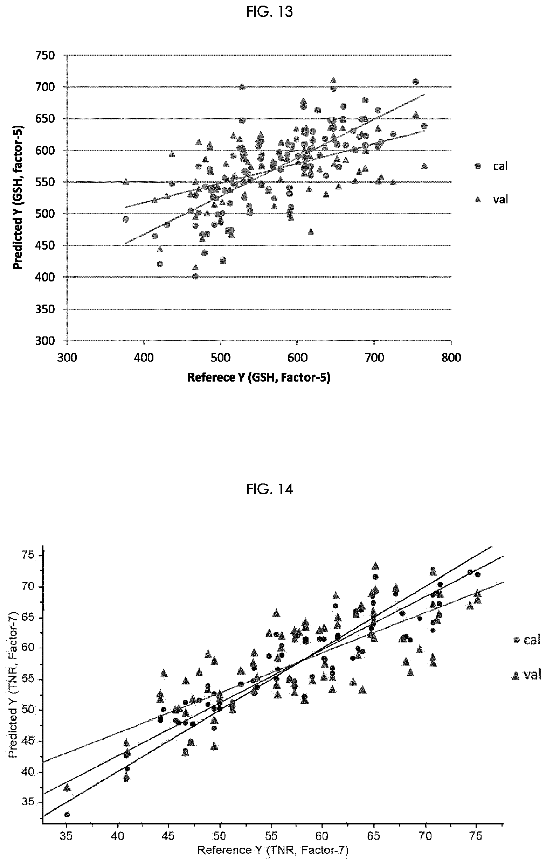

La figure 13 montre un modèle de régression PLS pour le paramètre du taux de glutathion GSH, réalisé avec les spectres MIR de la semence fraîche avec pré-traitement SNVD1 et validation croisée.

Le taux de glutathion GSH Y13 est calculé selon la loi mathématique $Y13 = \beta_0 + \sum_{j=1}^{n} \beta_j X'_j$, où $X'_{j\,(j\in[1;n])}$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

La matrice non balancée utilisée est constituée de 56 éjaculats. Le R$^2$ obtenu est de 0.78 et le RPD est de 1,04.

Les valeurs de référence du taux de glutathion sont indiquées en abscisse et représentées par les points triangle (série ▲ val).

Les valeurs prédites du taux de glutathion sont indiquées en ordonné et représentées par les points rond (série ● cal).

Les valeurs du taux de glutathion sont exprimées avec un facteur -5.

La figure 14 montre un modèle de régression PLS pour le paramètre du taux de non-retour à 56 jours, réalisé avec les spectres MIR de la semence fraîche avec pré-traitement SNVD1 et validation croisée.

Le taux de non-retour à 56 jours Y14 est calculé selon la loi mathématique $14 = \beta_0 + \sum_{j=1}^{n} \beta_j X'_j$, où $X'_{j\,(j\in[1;n])}$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

La matrice non balancée réalisée sur base des spectres acquis sur de la semence fraîche (avant congélation) est constituée de 96 éjaculats. Le R$^2$ obtenu est de 0.86 et le RPD est de 1.6. Ces performances permettent d'avoir une estimation du TNR56 (l'erreur de prédiction est égale à la moitié de l'erreur originale) de manière rapide et reproductible à partir du spectre MIR.

Les valeurs de référence du taux de non-retour à 56 jours sont indiquées en abscisse et représentées par les points triangle (série ▲ val).

Les valeurs prédites du taux de non-retour à 56 jours sont indiquées en ordonnée et représentées par les points rond (série ● cal).

Les valeurs du taux de non-retour à 56 jours sont exprimées avec un facteur -7.

En outre, la matrice non balancée réalisée sur base des spectres acquis sur de la semence congelée est constituée de 162 éjaculats. Le R$^2$ obtenu est de 0.53 et le RPD est de 1.2. Ces prédictions après congélation de la semence sont moins précises mais permettent néanmoins d'identifier les très bons et les très mauvais lots de semence.

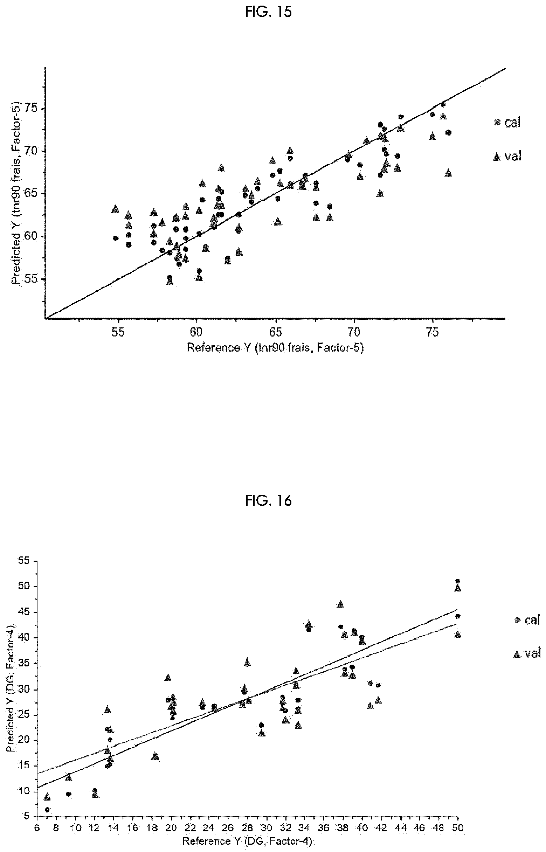

La figure 15 montre un modèle de régression PLS pour le paramètre du taux de non-retour à 90 jours, réalisé avec les spectres MIR de la semence fraîche avec pré-traitement SNVD1 et validation croisée.

Le taux de non-retour à 90 jours Y15 est calculé selon la loi mathématique $Y15 = \beta_0 + \sum_{j=1}^{n} \beta_j X'_j$, où $X'_{j\,(j\in[1;n])}$ est la dérivée première de l'absorption $X_j$, normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

La matrice non balancée réalisée sur base des spectres acquis sur de la semence fraîche (avant congélation) est constituée de 67 éjaculats. Le R$^2$ obtenu est de 0.82 et le RPD est de 1.5. Ces performances permettent d'avoir une estimation du TNR à 90 jours de l'éjaculat (l'erreur de prédiction est égale à la moitié de l'erreur originale) de manière rapide et reproductible à partir du spectre MIR.

Les valeurs de référence du taux de non-retour à 90 jours sont indiquées en abscisse et représentées par les points triangle (série ▲ val).

Les valeurs prédites du taux de non-retour à 90 jours sont indiquées en ordonnée et représentées par les points rond (série ● cal).

Les valeurs du taux de non-retour à 90 jours sont exprimées avec un facteur -5.

En outre, la matrice non balancée réalisée sur base des spectres acquis sur de la semence congelée est constituée de 99 éjaculats. Le R$^2$ obtenu est de 0.86 et le RPD est de 1.3. Ces prédictions après congélation de la semence sont moins précises mais permettent néanmoins d'identifier les très bons et les très mauvais lots de semence.

La figure 16 montre un modèle de régression PLS pour le paramètre du diagnostic de gestation, réalisé avec les spectres MIR de la semence fraîche avec pré-traitement SNVD1 et validation croisée.

Le diagnostic de gestation Y16 est calculé selon la loi mathématique $Y16 = \beta_0 + \sum_{j=1}^{n} \beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont

des constantes.

La matrice non balancée réalisée sur base des spectres acquis sur de la semence fraîche (avant congélation) est constituée de 49 éjaculats. Le $R^2$ obtenu est de 0.79 et le RPD est de 1.6. Ces performances permettent d'avoir une estimation du diagnostic de gestation de la semence (l'erreur de prédiction est égale à la moitié de l'erreur originale) de manière rapide et reproductible à partir du spectre MIR sur la semence fraîche.

Les valeurs de référence du diagnostic de gestation sont indiquées en abscisse et représentées par les points triangle (série ▲ val).

Les valeurs prédites du diagnostic de gestation sont indiquées en ordonnée et représentées par les points rond (série ● cal).

Les valeurs du diagnostic de gestation sont exprimées avec un facteur -5.

En outre, la matrice non balancée réalisée sur base des spectres acquis sur de la semence congelée est constituée de 81 éjaculats. Le $R^2$ obtenu est de 0.84 et le RPD est de 1.8. Ces performances permettent d'avoir une estimation du diagnostic de gestation (l'erreur de prédiction est égale à la moitié de l'erreur originale) de manière rapide et reproductible à partir du spectre MIR mesuré sur la semence congelée.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Méthode de détermination de la qualité d'une semence d'un animal, comprenant les étapes de :

    - prélèvement d'au moins une semence fraîche ou congelée,
    - mesure d'au moins un spectre d'absorption $X_j$ d'au moins un échantillon de ladite semence,

    **caractérisée en ce que** ladite méthode comprend en outre les étapes de :

    - détermination à partir dudit au moins un spectre d'absorption $X_j$, d'une valeur de la dérivée première des absorptions $X'_j$,
    - calcul d'au moins un des paramètres, représentatifs de la qualité de ladite semence, choisi dans le groupe constitué de la concentration **Y1,** la mobilité **Y2,** le taux de spermatozoïdes progressifs **Y3,** la viabilité **Y4,** le pourcentage de spermatozoïdes vivants avec des phospholipides stables **Y5,** le potentiel mitochondrial **Y6,** le pourcentage de spermatozoïdes avec des lipides peroxydés **Y7,** le pourcentage de spermatozoïdes avec un acrosome intègre **Y8,** la capacité antioxydante totale TAC **Y9,** la composition en acides gras **Y10,** de pourcentage de spermatozoïdes présentant une morphologie normale **Y11,** l'osmolarité **Y12** et le taux de glutathion GSH **Y13,** le taux de non-retour à 56 jours **Y14,** le taux de non-retour à 90 jours **Y15,** le diagnostic de gestation **Y16,** à partir de ladite dérivée première de l'absorption $X'_j$ précédemment déterminée pour la détermination de la qualité de ladite semence.

2. Méthode selon la revendication 1, dans laquelle ledit calcul est un calcul d'au moins deux desdits paramètres, de préférence un calcul d'au moins trois desdits paramètres, préférentiellement un calcul d'au moins quatre desdits paramètres, de manière préférée un calcul d'au moins cinq desdits paramètres, avantageusement un calcul d'au moins six desdits paramètres, de manière avantageuse un calcul d'au moins sept desdits paramètres, de manière particulièrement avantageuse un calcul d'au moins huit desdits paramètres, de préférence un calcul d'au moins neuf desdits paramètres, préférentiellement un calcul d'au moins dix desdits paramètres.

3. Méthode selon la revendication 1 ou 2, dans laquelle ledit au moins un spectre d'absorption $X_j$ comprend une première plage de nombre d'ondes choisie dans la plage de nombre d'ondes [1800 cm-1 ; 900 cm-1] et/ou une deuxième plage de nombre d'ondes choisie dans la plage de nombre d'ondes [3000 cm$^{-1}$ ; 2700 cm$^{-1}$].

4. Méthode selon l'une des revendications 1 à 3, dans laquelle :

    - ladite concentration Y1 est calculée selon la loi mathématique $Y1 = \beta_0 + \sum_{j=1}^{n} \beta_j X'_j$, où $X'_{j\,(j\in[1;n])}$ est la dérivée première de l'absorption $X_j$, de préférence normalisée par un pré-traitement SNV (« Standard Normal Variate »), pour la plage de nombre d'ondes [1800 cm$^{-1}$ ; 900 cm$^{-1}$] et les coefficients de pondération $\beta_0$ et $\beta_{j(j\in[1;n])}$ sont des constantes ; et/ou
    - ladite mobilité Y2 est calculée selon la loi mathématique $Y2 = \beta_0 + \sum_{j=1}^{n} \beta_j X'_j$, où $X'_{j\,(j\in[1;n])}$ est la dérivée première de l'absorption $X_j$, de préférence normalisée par un prétraitement SNV, pour la plage de nombre d'ondes [1800 cm-1 ; 900 cm-1], et les coefficients de pondération $\beta_0$ et $\beta_{j(j\in[1;n])}$ sont des constantes ; et/ou

- ledit taux de spermatozoïdes progressifs Y3 est calculé selon la loi mathématique $Y3 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1], et les coefficients de pondération $\beta_0$ et $\beta_{j(j\in[1;n])}$ sont des constantes ; et/ou

- ladite viabilité Y4 est calculée selon la loi mathématique $Y4 = \beta_0 + \sum_{j=1}^{n}\beta_j X'_j$, où $X'_{j\,(j\in[1;n])}$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- Ledit pourcentage de spermatozoïdes vivant avec des phospholipides stables Y5 est calculée selon la loi mathématique $Y5 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit potentiel mitochondrial Y6 est calculé selon la loi mathématique $Y6 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit pourcentage de spermatozoïdes avec des lipides peroxydés Y7 est calculé selon la loi mathématique Y7 = $\beta_0 + \sum_{j=1}^{n}\beta_j X'_j$, où $X'_{j\,(j\in[1;n])}$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit pourcentage de spermatozoïdes avec un acrosome intègre Y8 est calculée selon la loi mathématique Y8 = $\beta_0 + \sum_{j=1}^{n}\beta_j X'_j$, où $X'_{j\,(j\in[1;n])}$ est la dérivée première de l'absorption $X_j$, de préférence normalisée par un prétraitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ladite capacité antioxydante totale TAC Y9 est calculée selon la loi mathématique $Y9 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1700 cm-1 ; 910 cm-1] et les coefficients de pondération $\beta_0$ et $\beta_{j(j\in[1;n])}$ sont des constantes ; et/ou

- ladite composition en acides gras Y10 est calculée selon la loi mathématique $Y10 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1] et pour la plage de nombre d'ondes [3000 cm-1 ; 2700 cm-1] et les coefficients de pondération $\beta_0$ et $\beta_{j(j\in[1;n])}$ sont des constantes ; et/ou

- ladite morphologie **Y11** est calculée selon la loi mathématique $Y11 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ladite osmolarité $Y12$ est calculée selon la loi mathématique $Y12 = \beta_0 + \sum_{j=1}^{n}\beta_j X'_j$, où $X'_{j\,(j\in[1;n])}$ est la dérivée première de l'absorption $X_j$, de préférence normalisée par un pré-traitement SNV, pour la plage de nombre d'ondes [1700 cm-1 ; 910 cm-1] et les coefficients de pondération $\beta_0$ et $\beta_{j(j\in[1;n])}$ sont des constantes ; et/ou

- ledit taux de GSH $Y13$ est calculé selon la loi

mathématique $Y13 = \beta_0 + \sum_{j=1}^{n} \beta_j X'_j$ ,

où $X'_j$ $(j\in[1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit taux de non-retour à 56 jours Y14 est calculé selon la loi mathématique

$$Y14 = \beta_0 + \sum_{j=1}^{n} \beta_j X'_j$$ , où

$X'_j$ $(j\in[1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit taux de non-retour à 90 jours Y15 est calculé selon la loi mathématique

$$Y15 = \beta_0 + \sum_{j=1}^{n} \beta_j X'_j$$ , où

$X'_j$ $(j\in[1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes ; et/ou

- ledit diagnostic de gestation Y16 est calculé selon la loi mathématique

$$Y16 = \beta_0 + \sum_{j=1}^{n} \beta_j X'_j$$ , où

$X'_j$ $(j\in[1;n])$ est la dérivée première de l'absorption $X_j$, de préférence normalisée par un pré-traitement SNV, pour la plage de nombre d'ondes [1800 cm-1 ; 900 cm-1] et les coefficients de pondération $\beta_0$ et $\beta_{j(j\in[1;n])}$ sont des constantes.

5. Méthode selon l'une quelconque des revendications précédentes, **caractérisée en ce que** lors de l'étape de mesure, au moins deux, de préférence au moins trois, spectres d'absorption d'au moins un échantillon de ladite semence sont mesurés et **en ce que** ladite étape de détermination d'une valeur de la dérivée première de l'absorption $X'_j$ comprend une étape de réalisation d'une moyenne desdits spectres mesurés à partir de laquelle est déterminée ladite valeur de la dérivée première de l'absorption $X'_j$.

6. Méthode selon l'une quelconque des revendications précédentes, laquelle comprend en outre une étape de comparaison dudit au moins un paramètre calculé avec un seuil prédéterminé spécifique audit paramètre, permettant de valider ladite semence pour des besoins de reproduction dans le cas où ledit paramètre calculé est supérieur ou égal audit seuil prédéterminé spécifique dudit paramètre ou permettant de rejeter ladite semence dans le cas où ledit paramètre calculé est inférieur audit seuil prédéterminé spécifique dudit paramètre.

7. Méthode selon l'une quelconque des revendications précédentes, dans laquelle la détermination de la qualité de ladite semence fraiche, est obtenu entre 30 secondes et 5 minutes, de préférence entre 30 secondes et 4 minutes, préférentiellement entre 30 secondes et 3 minutes, de manière préférée entre 30 secondes et 2 minutes, préférentiellement entre 30 secondes et 1 minute.

8. Méthode selon l'une quelconque des revendications précédentes, dans laquelle la détermination de la qualité de ladite semence congelée, est obtenue entre 30 minutes et 90 minutes, de préférence entre 30 minutes et 75 minutes, préférentiellement entre 30 minutes et 60 minutes, de manière préférée entre 30 minutes et 45 minutes, de manière particulièrement avantageuse entre 30 minutes et 35 minutes.

9. Méthode selon la revendication 8, laquelle comprend en outre une étape de fabrication de paillettes pour les besoins de reproduction à partir de ladite semence validée.

10. Utilisation de la méthode selon l'une quelconque des revendications 1 à 9 pour fabriquer une paillette d'insémination artificielle de semence d'un animal comprenant un score qualitatif pour au moins un des paramètres calculés, de préférence un score qualitatif global, représentatif de la qualité de la semence sélectionnée par ladite méthode.

11. Utilisation d'un ordinateur pour la mise en oeuvre de la méthode selon l'une quelconque des revendications 1 à 9.

12. Logiciel pour la mise en oeuvre de la méthode selon l'une quelconque des revendications 1 à 9.

**Patentansprüche**

1. Verfahren zum Bestimmen der Qualität eines Samens eines Tiers, umfassend die folgenden Schritte:

- Entnehmen von mindestens einem frischen oder gefrorenen Samen,

- Messen mindestens eines Absorptionsspektrums $X_j$ von mindestens einer Probe des Samens,

**dadurch gekennzeichnet, dass** das Verfahren ferner die folgenden Schritte umfasst:

- Bestimmen, aus dem mindestens einen Absorptionsspektrum $X_j$, eines Werts der ersten Ableitung der Absorptionen $X_j'$,
- Berechnen mindestens eines der Parameter, die repräsentativ für die Qualität des Samens sind, ausgewählt aus der Gruppe bestehend aus Konzentration Y1, Beweglichkeit Y2, Zahl progressiver Spermien Y3, Lebensfähigkeit Y4, Prozentsatz lebender Spermien mit stabilen Phospholipiden Y5, mitochondrialem Potenzial Y6, Prozentsatz an Spermien mit peroxidierten Lipiden Y7, Prozentsatz an Spermien mit einem integriertem Akrosom Y8, totaler antioxidativer Kapazität TAC Y9, Fettsäurezusammensetzung Y10, Prozentsatz an Spermien, die eine normale Morphologie aufweisen Y11, Osmolarität Y12 und Glutathionspiegel GSH Y13, Non-Return-Rate nach 56 Tagen Y14, Non-Return-Rate nach 90 Tagen Y15, Trächtigkeitsdiagnose Y16, anhand der ersten Ableitung der Absorption $X_j'$, die zuvor zum Bestimmen der Qualität des Samens bestimmt wurde.

2. Verfahren nach Anspruch 1, wobei das Berechnen ein Berechnen von mindestens zwei der Parameter, vorzugsweise ein Berechnen von mindestens drei der Parameter, bevorzugt ein Berechnen von mindestens vier der Parameter, bevorzugterweise ein Berechnen von mindestens fünf der Parameter, vorteilhafterweise ein Berechnen von mindestens sechs der Parameter, vorteilhafterweise ein Berechnen von mindestens sieben der Parameter, besonders vorteilhaft ein Berechnen von mindestens acht der Parameter, vorzugsweise ein Berechnen von mindestens neun der Parameter, bevorzugt ein Berechnen von mindestens zehn der Parameter ist.

3. Verfahren nach Anspruch 1 oder 2, wobei das mindestens eine Absorptionsspektrum $X_j$ einen ersten Wellenzahlbereich, der ausgewählt ist aus dem Wellenzahlbereich [1800 cm$^{-1}$; 900 cm$^{-1}$], und/oder einen zweiten Wellenzahlbereich, der ausgewählt ist aus dem Wellenzahlbereich [3000 cm$^{-1}$; 2700 cm$^{-1}$], umfasst.

4. Verfahren nach einem der Ansprüche 1 bis 3, wobei:

- die Konzentration Y1 gemäß dem Rechengesetz $Y1 = \beta_0 + \sum_{j=1}^{n} \beta_j X_j'$ berechnet wird, wobei $X_j'$ $(j \in [1;n])$ die erste Ableitung der Absorption $X_j$, vorzugsweise normalisiert durch SNV-Vorverarbeitung ("Standard Normal Variate"), für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Beweglichkeit Y2 gemäß dem Rechengesetz $Y2 = \beta_0 + \sum_{j=1}^{n} \beta_j X_j'$ berechnet wird, wobei $X_j'$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die progressive Spermienzahl Y3 gemäß dem Rechengesetz $Y3 = \beta_0 + \sum_{j=1}^{n} \beta_j X_j'$, berechnet wird, wobei $X_j'$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Lebensfähigkeit Y4 gemäß dem Rechengesetz $Y4 = \beta_0 + \sum_{j=1}^{n} \beta_j X_j'$ berechnet wird, wobei $X_j'$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- der Prozentsatz lebender Spermien mit stabilen Phospholipiden Y5 gemäß dem mathematischen Gesetz $Y5 = \beta_0 + \sum_{j=1}^{n} \beta_j X_j'$ berechnet wird, wobei $X_j'$ $(j \in [1;n])$ die erste Ableitung der Absorption $X_j$, vorzugsweise normalisiert durch SNV-Vorbehandlung, für den Wellenzahlbereich [1800 cm-1; 900 cm-1] ist und die Gewichtungskoeffizienten $\beta_0$ und $\beta_{j(j \in [1;n])}$ Konstanten sind; und/oder

- das mitochondriale Potenzial Y6 gemäß dem mathematischen Gesetz

$$Y6 = \beta_0 + \sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorbehandlung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- der Prozentsatz an Spermien mit peroxidierten Lipiden $Y7$ gemäß dem mathematischen Gesetz $$Y7 = \beta_0 + \sum_{j=1}^{n} \beta_j X'_j$$ berechnet wird, wobei $X'_j$ $(j \in [1;n])$ die erste Ableitung der Absorption $X_j$, vorzugsweise normalisiert durch SNV-Vorbehandlung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- der Prozentsatz an Spermien mit einem integriertem Akrosom 78 gemäß dem mathematischen Gesetz $Y8 = $ $$\beta_0 + \sum_{j=1}^{n} \beta_j X'_j$$ berechnet wird, wobei $X'_j$ $(j \in [1;n])$ die erste Ableitung der Absorption $X_j$, vorzugsweise normalisiert durch SNV-Vorbehandlung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die totale antioxidative Kapazität TAC $Y9$ gemäß dem Rechengesetz $$Y9 = \beta_0 + \sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorverarbeitung, für den Wellenzahlbereich [1700 cm$^{-1}$; 910 cm$^{-1}$] ist und die Gewichtungskoeffizienten $\beta_0$ und $\beta_{j(j \in [1;n])}$ Konstanten sind; und/oder

- die Fettsäurezusammensetzung $Y10$ gemäß dem Rechengesetz $$Y10 = \beta_0 + \sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] und für den Wellenzahlbereich [3000 cm$^{-1}$; 2700 cm$^{-1}$] ist und die Gewichtungskoeffizienten $\beta_0$ und $\beta_{j(j \in [1;n])}$ Konstanten sind; und/oder

- die Morphologie $Y11$ gemäß dem Rechengesetz $Y11 = $ $$\beta_0 + \sum_{j=1}^{n} \beta_j X'_j$$ berechnet wird, wobei $X'_j$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Osmolarität $Y12$ gemäß dem Rechengesetz $Y12 = \beta_0 + $ $$\sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorverarbeitung, für den Wellenzahlbereich [1700 cm$^{-1}$; 910 cm$^{-1}$] ist und die Gewichtungskoeffizienten $\beta_0$ und $\beta_{j(j \in [1;n])}$ Konstanten sind; und/oder

- der GSH-Spiegel $Y13$ gemäß dem Rechengesetz $Y13 = $ $$\beta_0 + \sum_{j=1}^{n} \beta_j X'_j$$ berechnet wird, wobei $X'_j$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Non-Return-Rate nach 56 Tagen $Y14$ gemäß dem Rechengesetz $$Y14 = \beta_0 + \sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Non-Return-Rate nach 90 Tagen $Y15$ gemäß dem Rechengesetz $$Y15 = \beta_0 + \sum_{j=1}^{n} \beta_j X'_j$$ berechnet wird,

wobei $X'_j$ $(j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind; und/oder

- die Trächtigkeitsdiagnose $Y16$ gemäß dem

Rechengesetz

$$Y16 = \beta_0 + \sum_{j=1}^{n} \beta_j X_j'$$

berechnet wird, wobei $X_j' \, (j \in [1;n])$ die erste Ableitung der Absorption $X_j$, vorzugsweise normalisiert durch SNV-Vorverarbeitung, für den Wellenzahlbereich [1800 cm$^{-1}$; 900 cm$^{-1}$] ist und die Gewichtungskoeffizienten $\beta_0$ und $\beta_{j(j \in [1;n])}$ Konstanten sind.

5. Verfahren nach einem der vorherigen Ansprüche, **dadurch gekennzeichnet, dass** bei dem Messschritt mindestens zwei, vorzugsweise mindestens drei, Absorptionsspektren von mindestens einer Probe des Samens gemessen werden und dass der Schritt eines Bestimmens eines Werts der ersten Ableitung der Absorption $X_j'$ einen Schritt eines Bildens eines Mittelwerts der gemessenen Spektren umfasst, anhand dessen der Wert der ersten Ableitung der Absorption $X_j'$ bestimmt wird.

6. Verfahren nach einem der vorherigen Ansprüche, ferner umfassend einen Schritt eines Vergleichens des mindestens einen berechneten Parameters mit einem vorbestimmten Schwellenwert, der für den Parameter spezifisch ist, was ermöglicht, den Samen in dem Fall für Reproduktionszwecke zu validieren, dass der berechnete Parameter größer als oder gleich wie der vorbestimmte Schwellenwert ist, der für den Parameter spezifisch ist, oder was ermöglicht, den Samen in dem Fall zurückzuweisen, dass der berechnete Parameter kleiner als der vorbestimmte Schwellenwert ist, der für den Parameter spezifisch ist.

7. Verfahren nach einem der vorherigen Ansprüche, wobei das Bestimmen der Qualität des frischen Samens, zwischen 30 Sekunden und 5 Minuten, vorzugsweise zwischen 30 Sekunden und 4 Minuten, bevorzugt zwischen 30 Sekunden und 3 Minuten, bevorzugterweise zwischen 30 Sekunden und 2 Minuten, bevorzugt zwischen 30 Sekunden und 1 Minute, erlangt wird.

8. Verfahren nach einem der vorherigen Ansprüche, wobei das Bestimmen der Qualität des frischen Samens, zwischen 30 Minuten und 90 Minuten, vorzugsweise zwischen 30 Minuten und 75 Minuten, bevorzugt zwischen 30 Minuten und 60 Minuten, bevorzugterweise zwischen 30 Minuten und 45 Minuten, besonders bevorzugt zwischen 30 Minuten und 35 Minuten, erlangt wird.

9. Verfahren nach Anspruch 8, das ferner einen Schritt zum Herstellen von Pailletten für Reproduktionszwecke aus dem validierten Samen umfasst.

10. Paillette zur künstlichen Besamung mit Samen eines Tiers, umfassend eine qualitative Punktbewertung für mindestens einen der berechneten Parameter, vorzugsweise eine qualitative Gesamtpunktbewertung, die repräsentativ für die Qualität des Samens ist, der durch die Verwendung des Verfahrens nach einem der vorherigen Ansprüche erlangt wird.

11. Verwendung eines Computers zum Durchführen des Verfahrens nach einem der Ansprüche 1 bis 9.

12. Software zum Durchführen des Verfahrens nach einem der Ansprüche 1 bis 9.

## Claims

1. Method for determining the quality of semen of an animal, comprising the steps of:

   - collecting at least one fresh or frozen semen sample,
   - measuring at least one absorption spectrum $X_j$ from at least one sample of said semen,

   **characterised in that** said method further comprises the steps of:

   - determining, from said at least one absorption spectrum $X_j$, a value of the first derivative of the absorptions $X_j'$,
   - calculating at least one of the parameters, representative of the quality of said semen, chosen from the group consisting of concentration Y1, motility Y2, rate of progressive spermatozoa Y3, viability Y4, percentage of live spermatozoa with stable phospholipids Y5, mitochondrial potential Y6, percentage of spermatozoa with peroxidised lipids Y7, percentage of spermatozoa with an intact acrosome *Y8,* total antioxidant capacity (TAC) Y9, fatty acid composition Y10, percentage of spermatozoa with normal morphology Y11, osmolarity Y12 and glutathione rate GSH Y13, non-return rate at 56 days Y14, non-return rate at 90 days Y15, pregnancy diagnosis Y16, from said first derivative of the absorption $X_j'$ previously determined for determining the quality of said semen.

2. Method according to claim 1, wherein said calculation is a calculation of at least two of said parameters, preferably a calculation of at least three of said parameters, preferentially a calculation of at least four of said parameters, preferably a calculation of at least five of said parameters, advantageously a calculation of at least six of said parameters, advantageously a calculation of at least seven of said parameters, particularly advantageously a calculation of at least eight of said parameters, preferably a calculation of at least nine of said parameters, preferably a calculation of at least ten of said parameters.

3. Method according to claim 1 or 2, wherein said at least one absorption spectrum $X_j$ comprises a first wave number range chosen from the wave number range [1800 cm$^{-1}$; 900 cm$^{-1}$] and/or a second wave number range chosen from the wave number range [3000 cm$^{-1}$; 2700 cm$^{-1}$].

4. Method according to one of claims 1 to 3, wherein:

- said concentration Y1 is calculated according to the mathematical law

$$Y1 = \beta_0 + \sum_{j=1}^{n} \beta_j X_j'$$

, where $X_j'{}_{(j \in [1;n])}$ is the first derivative of the absorption $X_j$, preferably normalised by SNV ("Standard Normal Variate") preprocessing, for the wave number range [1800 cm$^{-1}$; 900 cm$^{-1}$] and the weighting coefficients $\beta_0$ and $\beta_{j (j \in [1;n])}$ are constants; and/or

- said motility Y2 is calculated according to the mathematical law

$$Y2 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$], and the weighting coefficients $\beta_0$ and $\beta_{j (j \in [1;n])}$ are constants; and/or

- said rate of progressive spermatozoa Y3 is calculated according to the mathematical law

$$Y3 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$], and the weighting coefficients $\beta_0$ and $\beta_{j (j \in [1;n])}$ are constants; and/or

- said viability Y4 is calculated according to the mathematical law

$$Y4 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j (j \in [1;n])}$ are constants; and/or

- said percentage of live spermatozoa with stable phospholipids Y5 is calculated according to the mathematical law

$$Y5 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j (j \in [1;n])}$ are constants; and/or

- said mitochondrial potential Y6 is calculated according to the mathematical law

$$Y6 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j (j \in [1;n])}$ are constants; and/or

- said percentage of spermatozoa with peroxidised lipids Y7 is calculated according to the mathematical law

$$Y7 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j (j \in [1;n])}$ are constants; and/or

- said percentage of spermatozoa with an intact acrosome Y8 is calculated according to the mathematical law

$$Y8 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j (j \in [1;n])}$ are constants; and/or

- said total antioxidant capacity TAC Y9 is calculated according to the mathematical law

$$Y9 = \beta_0 + \sum_{j=1}^{n} \beta_j X_j'$$

, where $X_j'{}_{(j \in [1;n])}$ is the first derivative of the absorption $X_j$, preferably normalised by SNV preprocessing, for the wave number range [1700 cm$^{-1}$; 910 cm$^{-1}$]

and the weighting coefficients $\beta_0$ and $\beta_{j\,(j\in[1;n])}$ are constants; and/or
- said fatty acid composition Y10 is calculated according to the mathematical law

$$Y10 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and for the wave number range [3000 cm$^{-1}$; 2700 cm$^{-1}$] and the weighting coefficients $\beta_0$ and $\beta_{j\,(j\in[1;n])}$ are constants; and/or
- said morphology Y11 is calculated according to the mathematical law

$$Y11 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j\,(j\in[1;n])}$ are constants; and/or
- said osmolarity Y12 is calculated according to the mathematical law

$$Y12 = \beta_0 + \sum_{j=1}^{n} \beta_j\, X_j'$$

, where $X_{j\,(j\in[1;n])}'$ is the first derivative of the absorption $X_j$, preferably normalied by SNV preprocessing, for the wave number range [1700 cm$^{-1}$; 910 cm$^{-1}$] and the weighting coefficients $\beta_0$ and $\beta_{j\,(j\in[1;n])}$ are constants; and/or
- said GSH rate Y13 is calculated according to the mathematical law

$$Y13 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j\,(j\in[1;n])}$ are constants; and/or
- said non-return rate at 56 days Y14 is calculated according to the mathematical law

$$Y14 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j\,(j\in[1;n])}$ are constants; and/or
- said non-return rate at 90 days 715 is calculated according to the mathematical law

$$Y15 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j\,(j\in[1;n])}$ are constants; and/or
- said pregnancy diagnosis Y16 is calculated according to the mathematical law

$$Y16 = \beta_0 + \sum_{j=1}^{n} \beta_j\, X_j'$$

, where $X_{j\,(j\in[1;n])}'$ is the first derivative of the absorption $X_j$, preferably normalised by SNV preprocessing, for the wave number range [1800 cm$^{-1}$; 900 cm$^{-1}$] and the weighting coefficients $\beta_0$ and $\beta_{j\,(j\in[1;n])}$ are constants.

5. Method according to any one of the preceding claims, **characterised in that**, during the measurement step, at least two, preferably at least three, absorption spectra of at least one sample of said semen are measured, and said step of determining a value of the first derivative of the absorption $X_j'$ comprises a step of producing an average of said measured spectra from which said value of the first derivative of the absorption $X_j'$ is determined.

6. Method according to any one of the preceding claims, which further comprises a step of comparing said at least one calculated parameter with a predetermined threshold specific to said parameter, making it possible to validate said semen for reproduction purposes in the event that said calculated parameter is greater than or equal to said predetermined threshold specific to said parameter or allowing said semen to be rejected in the event that said calculated parameter is lower than said predetermined threshold specific to said parameter.

7. Method according to any one of the preceding claims, wherein the determination of the quality of said fresh semen, is obtained between 30 seconds and 5 minutes, preferably between 30 seconds and 4 minutes, preferentially between 30 seconds and 3 minutes, preferably between 30 seconds and 2 minutes, preferentially between 30 seconds and 1 minute.

8. Method according to any one of the preceding claims, wherein the determination of the quality of said frozen semen, is obtained between 30 minutes and 90 minutes, preferably between 30 minutes and 75 minutes, preferentially between 30 minutes and 60 minutes, preferably between 30 minutes and 45 minutes, particularly advantageously between 30 minutes and 35 minutes.

9. Method according to claim 8, which further comprises a step of manufacturing straws for reproductive purposes from said validated semen.

10. Artificial insemination straw for animal semen comprising a qualitative score for at least one of the calculated parameters, preferably an overall qualitative score, representative of the quality of the semen obtained by the use of the method according to any one of the preceding claims.

11. Use of a computer for implementing the method according to any one of claims 1 to 9.

12. Software for implementing the method according to any one of claims 1 to 9.

FIG. 1

FIG. 2

FIG. 3

FIG. 4

FIG. 5

FIG. 6

FIG. 7

FIG. 8

FIG. 9

FIG. 10

| | Blanc Bleu Belge (86 éch) | | Holstein (23 éch) | |
|---|---|---|---|---|
| | $R^2$ | RPD | $R^2$ | RPD |
| C10:0 | 0.8 | 1.2 | 0.61 | 1.7 |
| C12:0 | 0.79 | 1.2 | 0.6 | 0.8 |
| C13:0 | 0.72 | 1.0 | 0.92 | 2.4 |
| C14:0 | 0.62 | 0.8 | 0.35 | 1.0 |
| C15:0 | 0.75 | 1.2 | 0.55 | 0.9 |
| C16:0 | 0.42 | 1 | 0.42 | 1.1 |
| C16:1 cis9 | 0.9 | 1.2 | 0.38 | 1.2 |
| C18:0 | 0.78 | 0.8 | 0.99 | 3.0 |
| C18:1 cis9 | 0.8 | 1.0 | 0.22 | 1.2 |
| C18:2 n-6 | 0.38 | 1.3 | 0.92 | 2.0 |
| C18:3 n-3 | 0.65 | 1.6 | 0.93 | 1.2 |
| C20:4 n-6 | 0.22 | 1.0 | 0.39 | 1.2 |
| C22:1 | 0.76 | 0.9 | 0.18 | 1.5 |
| C22:5 n-3 | 0.77 | 1.0 | 0.98 | 1.4 |
| C22:6 n-3 | 0.58 | 1.6 | 0.86 | 2.0 |
| C24:6 n-3 | 0.79 | 1.5 | 0.78 | 1.8 |
| C22:4 n-3 | 0.6 | 1.8 | 0.99 | 1.8 |
| n-6 totaux | 0.4 | 0.9 | 0.98 | 2.8 |
| n-3 totaux | 0.57 | 1.6 | 0.83 | 1.8 |

FIG. 11

FIG. 12

FIG. 13

FIG. 14

FIG. 15

FIG. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103940802
- CN 103698310
- CN 103698311
- WO 2017068266 A
- FR 3042868

**Littérature non-brevet citée dans la description**

- **DANIEL FILIPE CRUZ et al.** Oxidative stress markers : Can they be used to evaluate human sperm quality 2. *Turkish Journal of Urology,* 14 Octobre 2015